# EUROPEAN PATENT SPECIFICATION

(11) **EP 0 215 627 B1**
(45) Date of publication and mention of the grant of the patent: **30.11.1994**
(21) Application number: 86306925.8
(22) Date of filing: 09.09.1986
(51) Int. Cl.: G11B 15/44

(54) **Auto-reverse tape recording apparatus**
Bandaufzeichnungsgerät mit automatischer Richtungsumkehr
Appareil d'enregistrement à bande avec auto-renversement

(30) Priority: 09.09.1985 JP 199258/85; 14.10.1985 JP 228187/85
(43) Date of publication of application: 25.03.1987
(73) Proprietor: SONY CORPORATION, Tokyo 141 (JP)
(72) Inventor: Ida, Mitsuru c/o PATENTS DIVISION, Shinagawa-ku Tokyo 141 (JP); Koga, Noriyuki c/o PATETNS DIVISION, Shinagawa-ku Tokyo 141 (JP)
(74) Representative: Purvis, William Michael Cameron

(56) References cited:
- EP-A- 0 066 809
- EP-A- 0 113 324
- US-A- 4 396 958
- US-A- 4 446 496

## Description

The invention relates generally to tape recording apparatus and more particularly to an auto-reverse tape recorder.

In conventional auto-reverse tape recorders, there is the capability that the tape travel can be manually changed from the normal run mode to the reverse run mode, or vice-versa, by operation of a changeover mechanism. Other known tape recorders include both a shut-off mechanism for shutting off the tape travel at the changeover point between the normal run mode and the reverse run mode, and a mode changing mechanism for changing over into the auto-repeat or continuous play mode, in order that the travel of the tape is shut off after normal run or reverse run (shut-off mode), or set in an auto-repeat mode (repeat mode) when the shut-off mechanism is placed in its working state by operation of the mode changing mechanism.

The changeover mechanism and the mode changing mechanism make operation of the tape recorder convenient, however, when they are both incorporated in the same tape recorder it presents a problem that the travel of the tape is shut off at the changeover point between normal run and reverse run when the changeover mechanism is operated under the state of the shut-off mode of the mode changing mechanism. Therefore, it is necessary for the mode changing mechanism to be changed over to the repeat mode, whenever the changeover mechanism is operated.

Furthermore, if the recording function is added to the auto-reverse type tape recorder in addition to the auto-reverse playback function, when the changeover means is carelessly operated in the record mode, the travel of the tape is changed over from normal run to reverse run, or vice-versa, so that double recording or the like is apt to happen. In addition, when recording is performed in the repeat mode of the mode changing mechanism, double recording or the like is also apt to happen, because the travel of the tape is changed to reverse run after one shuttle of the tape travel is completed.

Therefore, the care that must be exercised is rather troublesome in that it is necessary for the changeover mechanism not to be operated carelessly, or for the mode changing mechanism to be changed to the shut-off mode if a recording operation is performed.

Patent Specification US-A-4 396 958 discloses a tape recorder with an auto reverse system and a shut-off mode and which is operable in either a play back mode or a recording mode so that a changeover means selectively changes the direction of tape travel from a normal run direction to a reverse run direction or vice versa, the changeover means being inoperable when the recorder is in the record mode due to a selector switch preventing a solenoid from being energised.

Patent Specification EP-A-0 113 324 discloses a mechanism for tape players with auto reverse wherein a pivoted polyvalent lever carries gear wheels and projections which selectively cooperate with capstans and rollers to effect either forward or reverse movement of the tape according to the position to which the lever is pivoted.

According to one aspect of the invention there is provided an auto-reverse tape recording apparatus comprising:
a changeover mechanism selectively to change travel of a tape from a normal run to a reverse run by operation of changeover means;
a mechanism for detecting an end of the tape;
a shut-off mechanism to shut off travel of the tape near a tape end; and
a mode changing mechanism effective to changeover an operating mode of the apparatus from a shut-off mode to a repeat mode, in which repeat mode the travel of the tape is repeatedly performed from normal run to reverse run, and in which shut-off mode the travel of the tape is shut off by the shut-off mechanism as soon as the tape end is detected;
characterised in that in the shut-off mode the travel of the tape is ended after a normal run or after a reverse run, which reverse run may have followed a normal run, and wherein the apparatus further comprises switch means including an operating lever, a mode changeover lever and a manual changeover rod, wherein the mode changeover lever has an arm with an end which can be moved by a projection of the changeover rod upon operation of the manual changeover rod and the operating lever has a pin thereon which engages in a notched portion of the operating lever whereby the operating lever is moved by operation of the mode changeover lever so that the operating mode of the apparatus is changed over to a repeat mode if the changeover means is operated while the mode changing mechanism is in the shut-off mode.

According to a further aspect of the invention there is provided an auto-reverse type tape recorder with a stop mode, a playback mode and a recording mode comprising:
a tape end mechanism for detecting a tape end;
a shut-off mechanism for shutting off the travel of a tape due to detection of a tape end;
a mode changing mechanism for changing over an operating mode of the apparatus from a shut-off mode to a repeat mode, in which shut-off mode travel of the tape is shut off by the shut-off mechanism as soon as the tape end is detected after a normal run or after a reverse run, which reverse run may have followed a normal run, and in which repeat mode the travel of the tape is repeatedly performed from a normal run to a reverse run; and
switch means for changing over the mode changing mechanism from the repeat mode to the shut-off mode so that the travel of the tape is shut-off as soon as the tape end is detected after a normal run or a reverse run when the tape recorder is in the record mode;
characterised in that the tape recorder further comprises a record initiating rod, for movement from a return position to a forward position by which either the stop mode or the playback mode is changed over to the record mode;
wherein the switch means includes an operation lever having a pin thereon cooperating with a pressing portion formed as a projection on the record initiating rod, and a mode changeover lever with a notched portion and a pin on the operating lever which engages in the notched portion to effect changeover of the mode changing means from the repeat mode to the shut-off mode so that travel of the tape is shut-off as soon as the tape end is detected after a reverse run following a normal run when the record initiating rod is moved to the forward position.

In such an auto-reverse type tape recorder, the mode changing mechanism for changing over the auto-repeat playback number of a tape can be automatically changed to the repeat mode, even though it is in the shut-off mode, whenever the changeover mechanism for changing over the tape drive direction from the normal run mode to the reverse run mode, or vice-versa, is operated.

The mode changing lever of the mode changing mechanism for changing over the auto-play or continuous play mode, can be forcibly swung by operation of a rod of the changeover mechanism for changing over the direction of tape travel from normal to reverse, so that a shut-off lever of the shut-off mechanism is made inoperative.

The manual operation of changing over the direction of tape travel from normal to reverse. or from reverse to normal can be prevented during the recording mode.

The changeover rod of the mode changeover mechanism can be locked so as to be inoperative in the record mode.

The tape travel can be inhibited after a reverse run in the record mode, even though the mode changing mechanism is still set in the repeat mode.

The mode changing mechanism can be changed over by operation of a record initiating rod formed in the changeover mechanism.

The invention is diagrammatically illustrated by way of example with reference to the accompanying drawings, in which:-
Figure 1 is a plan view of one embodiment of an auto-reverse type tape recorder according to the invention;
Figure 2 is an exploded, perspective view of a tape driving system of the tape recorder of Figure 1;
Figure 3 is a plan view of the tape driving system of Figure 2;
Figure 4 is a plan view of a changeover mechanism for changing the direction of tape travel from normal to reverse or from reverse to normal;
Figure 5 is an exploded, perspective view of a portion of the changeover mechanism of Figure 4;
Figures 6A to 6C are plan views of respective portions of the changeover mechanism of Figure 4;
Figure 7 is a perspective view of a head mounting mechanism;
Figures 8A and 8B are plan views of the head mounting mechanism of Figure 7;
Figures 9A to 9D are plan views of a triggering mechanism of a mode changing mechanism;
Figure 10 is a cross-sectional view of the triggering mechanism of Figures 9A to 9D;
Figure 11A to 11D are plan views of a shut-off mechanism, a mode changing mechanism for changing over from an endless play mode, and the changeover mechanism;
Figure 12 is an exploded, perspective view of a recording mechanism and a shut-off mechanism operative only during a recording mode;
Figures 13A to 130 are plan views of the recording mechanism of Figure 12;
Figures 14A to 14F are plan views of the shut-off mechanism operative only during the recording mode;
Figure 15 is an exploded, perspective view of an erase head moving mechanism; and
Figures 16A and 16B are plan views of the erase head moving mechanism of Figure 15.

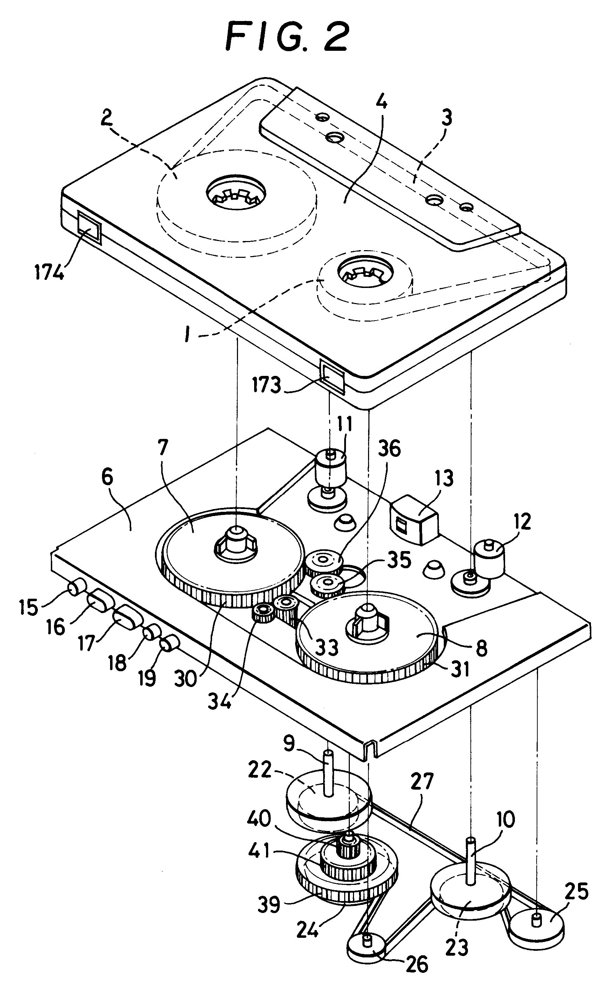

One application of the invention to an auto-reverse, small-size tape recorder that uses a compact cassette tape is described with reference to the accompanying drawings. Figure 2 shows a tape driving system of such a tape recorder having a tape cassette 4 that contains a magnetic tape 3 wound around left and right reels 1 and 2, respectively, and which is mounted horizontally above a chassis 6. On the chassis 6 are provided a left reel base 7 and a right reel base 8, two capstans 9 and 10 with two respective pinch rollers 11 and 12, and a magnetic playback and record head 13. When the reels 1 and 2 of the tape cassette 4 are mounted on the chassis 6 they are engaged with respective ones of the reel bases 7 and 8, and the magnetic tape 3 is passed over the capstans 9 and 10 and is adjacent the magnetic head 13. Mounted on the front of the chassis 6 are various changeover buttons, such as a record button 15, a playback button 16, a stop button 17, a fast forward button 18, and a rewind button 19.

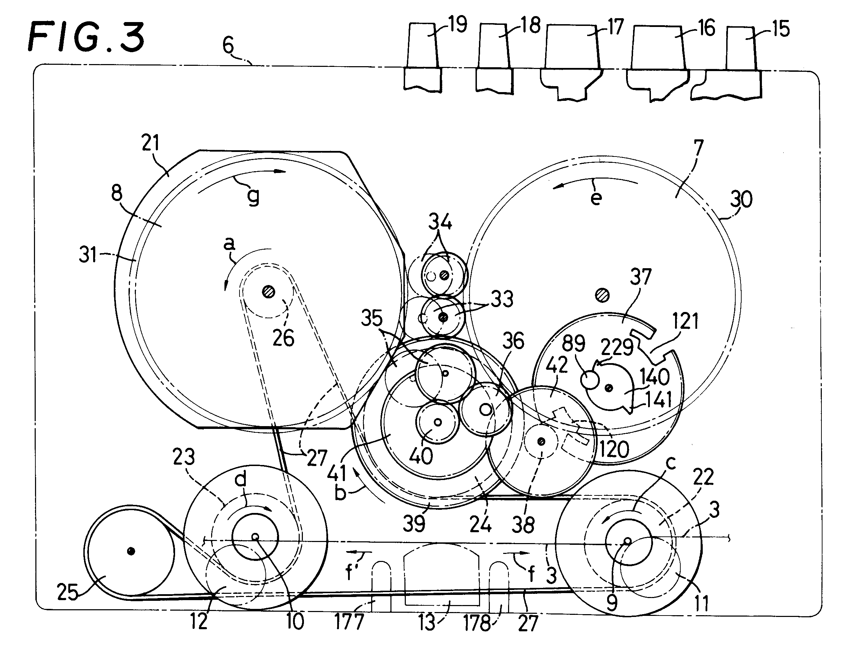

As shown in Figures 2 and 3 arranged below the chassis 6 is a flat, thin motor 21 mounted coaxially with the reel base 8, capstan pulleys 22 and 23, which also serve as fly-wheels, are affixed to the lower ends of the respective capstans 9 and 10. A driven pulley 24 is provided substantially at a middle position between the reel bases 7 and 8, and a guide pulley 25 is disposed at one side of the capstan pulley 23. These elements are driven by a flexible, elastomeric, drive belt 27 that is looped among the pulleys 22, 23, 24 and 25, and a driving pulley 26 of the motor 21.

Reel base gears 30 and 31 are disposed on the chassis 6 at the outer peripheries of the respective reel bases 7 and 8, and between the reel bases 7 and 8 there is provided a first gear 33 and a second gear 34 to provide, respectively, fast-forward and rewind modes of the magnetic tape 3, and gears 35 and 36 for providing the normal and reverse modes, respectively. Arranged below the chassis 6 is a gear 37 that has gear teeth over only portions of its circumference and which changes over the magnetic tape 3 from normal to reverse, or vice-versa, and also arranged below the chassis 6 is a driving gear 38 which intermittently drives the gear 37.

When any of the record button 15, the playback button 16, the fast forward button 18, and the rewind button 19 is pressed, a power switch (not shown) is actuated and the motor 21 is caused to rotate at constant speed, so that the driving pulley 26 rotates in the direction of arrow a shown in Figure 3, and the driven pulley 24 and the capstan pulleys 22 and 23 are rotated by means of the belt 27 in the directions of respective arrows b, c and d.

When the fast forward button 18 is pressed, the first gear 33 is engaged with a driving gear 39 that is formed integrally with the driven pulley 24, as shown in solid lines in Figure 3, and, simultaneously, the second gear 34, which is always engaged with the first gear 33, is selectively engaged with the reel base gear 30 of the reel base 7 by operation of a changeover mechanism. This causes the reel base 7 to be driven at high speed in the direction of arrow e, thus, resulting in a fast forward mode in which the magnetic tape 3 is driven in the direction of arrow f and then taken up by reel 1 at high speed.

When the rewind button 19 is pressed, the first gear 33 is selectively engaged with both the driving gear 39 and the reel base gear 31 of the other reel base 8, as shown in chain-dotted lines in Figure 3. This causes the reel base 8 to be driven at high speed in the direction of arrow g, thus, leading to a rewind mode in which the magnetic tape 3 is driven in the direction of arrow f′ and taken up by the reel 2 at high speed.

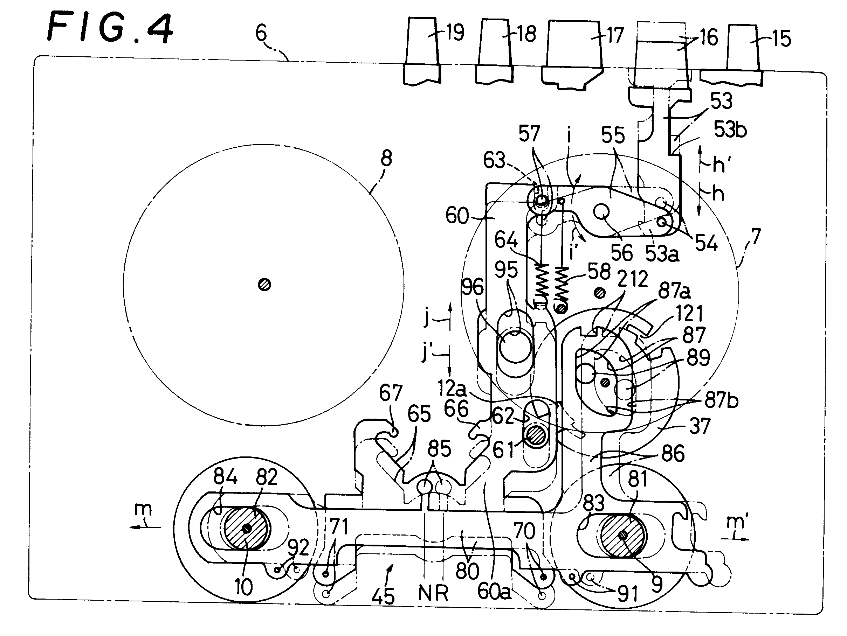

When the playback button 16 is pressed, the gear 35, which is always engaged with a driving gear 40, which is coaxially arranged with the driven pulley 24, is rotated in the same direction as the driven pulley 24 through a torque limiter (not shown), is selectively engaged with the driven gear 36, which is always engaged with the reel base gear 30 of the reel base 7, as indicated in solid lines in Figure 3, by operation of a changeover mechanism 45 of Figure 4 changing over into an auto-repeat or endless play mode. Simultaneously, the magnetic tape 3 is brought into contact with the magnetic head 13 by operation of a head holding mechanism 46, which will be described in detail hereinbelow, and also the pinch roller 11 is pressed against the capstan 9. This causes the reel base 7 to be driven in the direction of arrow e, which results in a normal playback mode in which the magnetic tape 3 is driven in the direction of arrow f and taken up by the reel 1, so that normal playback is performed by the magnetic head 13.

When the normal run of the magnetic tape 3 reaches the tape end, the partially toothless gear 37 is selectively engaged with the driving gear 38, which is formed integrally with a driven gear 42 that is driven by a driving gear 41, which is formed coaxially and integrally with the driven pulley 24, by operation of a later described triggering mechanism 47, so that the partially toothless gear 37 rotates one-half revolution. The changeover mechanism 45 is then driven and changed over to the reverse run, this causes the gear 35 to be selectively engaged with the reel base gear 31 of the reel base 8, as indicated in chain-dotted lines in Figure 3, and also the pinch roller 12 is pressed against the capstan 10. The reel base 8 is then driven in the direction of arrow g resulting in a reverse playback mode in which the magnetic tape 3 is driven in the direction of arrow f′ and taken up by the reel 2 of Figure 2, so that reverse playback is performed by the magnetic head 13.

This tape recorder also has a recording function and two tabs 173 and 174 for preventing the A and B sides of the tape from being erroneously erased are provided in the rear wall of the tape cassette 4, as shown in Figure 2. The presence or absence of the tabs 173, 174 is detected by a recording mechanism 172, which will be described in detail hereinbelow, so that normal and reverse recording can be conducted just as the above-described normal and reverse playback operations take place by pressing the record button 15. In such record mode, two erase heads 177 and 178 for normal run and reverse run are selectively brought into contact with the magnetic tape 3 by operation of an erase head moving mechanism 176, which will be described in detail hereinbelow.

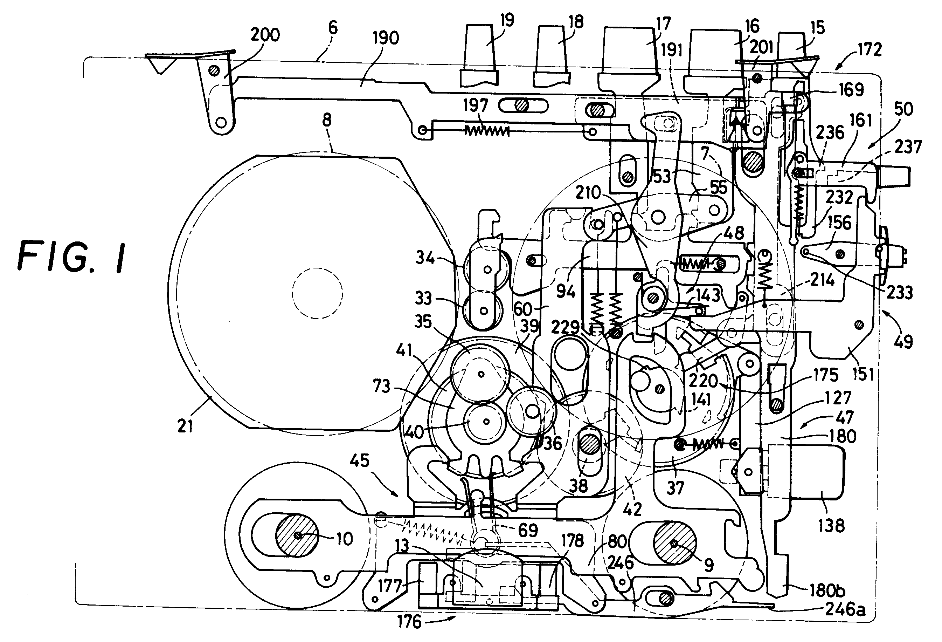

In any of these fast forward, rewind, playback or record modes, when the stop button 17 is pressed, the power switch (not shown) is turned off, the motor 21 stops, and the gears 33 and 34 or the gear 35 are returned to their neutral positions, as shown in Figure 1, thereby resulting in a stop mode.

In this tape recorder, the drive of the magnetic tape 3 can be shut-off automatically at the tape end by operation of a shut-off mechanism 48, which will be described in detail hereinbelow, and the stop mode is automatically obtained. In addition, this tape recorder can be enabled for selective changeover to a one cycle mode in which the magnetic tape 3 stops after a reverse run that follows a normal run and also can be enabled for a repeat mode in which the magnetic tape 3 repeatedly continues to be driven back and forth between a normal run and reverse run. This tape recorder can also be enabled so that the magnetic tape 3 can be manually changed over, as well as automatically, from normal run to reverse run.

Further, by means of a shut-off mechanism 175 which will be described hereinafter, when changing over from normal run to reverse run in the record mode, a shut-off motion is generated only when there is no tab 174 present for the B side of the tape cassette 4. In the record mode the tape recorder mechanism is arranged so that a mode changing mechanism 49 will be forcibly switched to the one-cycle mode and a mechanism 50 will be locked into a state preventing changeover.

Details of a changeover mechanism 45 for switching from normal to reverse or vice-versa are shown in Figure 1 and in Figures 4 to 6C. Figure 4 shows the playback button 16 affixed to one end of a playback operating rod 53 so as to be capable of moving in the directions of arrows h and h′. The rod 53 is arranged below the chassis 6 and is connected at the other end thereof to a connecting lever 55 by means of a pin 54. The connecting lever 55 is rotatably mounted by a shaft 56 on the chassis 6 so as to pivot in the directions of arrows i and i′, with the free end thereof having affixed thereto a pin 57. The connecting lever 55 is urged in the direction of arrow i′ by the force of a return spring 58, which is stretched from the connecting lever 55 to a post on the chassis 6.

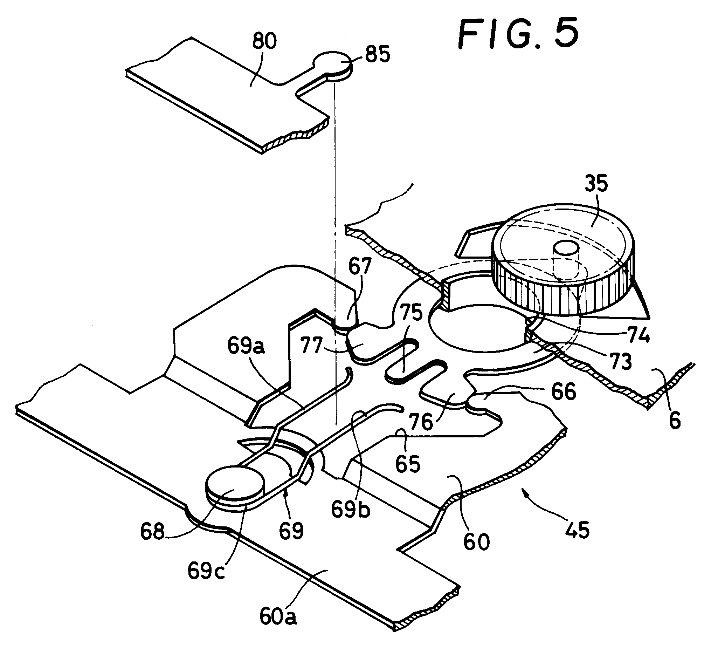

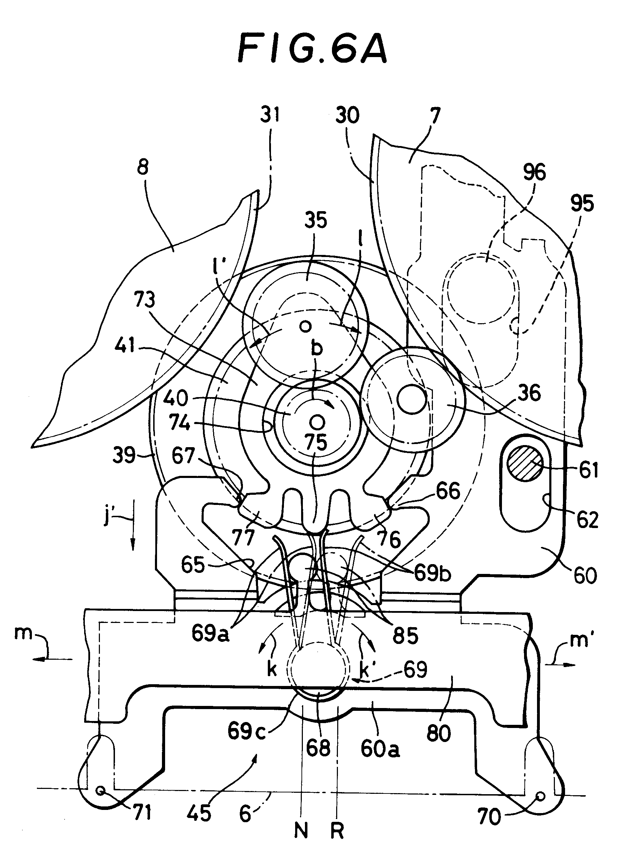

Mounted beneath the chassis 6 is a driving member 60 that is arranged for front to back sliding motion relative to the chassis 6. The driving member 60 is substantially L-shaped and is arranged for sliding motion in the directions of arrows j and j′ and is limited in its travel by an elongate hole 62 that co-operates with a shaft 61 of the driving gear 38. The pin 57 of the connecting lever 55 is fitted in a U-shaped notch 63 that is formed at one end of the driving member 60, and a tension spring 64 is stretched from the pin 57 to the driving member 60. An end portion 60a of the driving member 60 that is opposite the end adjacent the pin 57 is formed almost symmetrically with a right and left pair of restricting projections 66 and 67. The projections 66 and 67 are provided on opposite sides of a groove 65 formed in the end portion 60a. As shown in Figures 5 to 6C, a shaft 68 is a press-fit into a central portion of the end portion 60a of the driving member 60, with a U-shaped wire spring 69 mounted with its closed end on the shaft 68. More specifically, the wire spring 69 is fitted to the shaft 68 at a central portion 69c so that two arm portions 69a and 69b project towards the sides of the groove 65. In this way the spring 69 is free to swing in the directions of arrows k and k′. A pair of driving pins 70 and 71 are affixed to respective ends of the end portion 60a of the driving member 60 so as to project above the chassis 6.

As shown in Figures 5 to 6C, a changeover lever 73 is provided in the middle between the reel bases 7 and 8 below the chassis 6, and an inner portion of the changeover lever 73 is fitted into a round hole 74 formed in the chassis 6, whereby the changeover lever 73 can freely swing in the directions of arrows l and l′. The driving gear 40 is positioned within the periphery of the changeover lever 73, and the gear 35 is rotatably mounted at one end of the changeover lever 73. At the other end of the changeover lever 73, there are formed a projection 75 and a right and left pair of restricted projections 76 and 77. The projections 76 and 77 are symmetrically arranged relative to the projection 75. The changeover lever 73 is arranged so that the end portion 60a thereof is located within the groove 65 of the driving member 60 and so that the pair of projections 76 and 77 are placed between the pair of restricting projections 66 and 67. As a consequence, both the arm portions 69a and 69b of the wire spring 69 are located on respective sides of the projection 75 of the changeover lever 73. The gear 35, which is rotatably mounted on the changeover lever 73, and the driving gear 40 are always engaged with each other.

As shown in Figure 4, a changeover rod 80 is arranged between the chassis 6 and the end portion 60a of the driving member 60 so as to make a right angle with the direction of movement of the driving member 60. The changeover rod 80 is arranged to be freely moved in the direction of arrows m and m′ between a normal position N, shown in solid lines, and a reverse position R, shown in chain-dotted lines. This movement is made possible by a loose fit between guide shafts 81 and 82, the inner peripheries of which serve as the bearings of the capstans 9 and 10, and respective slots 83 and 84 formed in the changeover rod 80. A projection 85 for pressing the wire spring 69 is provided at the central portion of the changeover rod 80 and the pressing projection 85 is formed so as to be inserted between the arms 69a and 69b of the wire spring 69. One end portion of the changeover rod 80 is provided with an arm 86 overlapping the partially toothless gear 37. A yoke cam 87 is formed in the arm 86 and is engaged with a driving pin 89 that protrudes from the top surface of the partially toothless gear 37. A pair of restricting pins 91 and 92 are affixed to the changeover rod 80 and project above the chassis 6.

In operation of the changeover mechanism 45, in a stop mode indicated in chain-dotted lines in Figure 4, when the connecting lever 55 is moved backward in the direction of arrow i′ by the return spring 58, the playback operating rod 53 is moved backward in the direction of arrow h′ and, simultaneously, the driving member 60 is pressed by the pin 57 to move back toward a return position in the direction of arrow j′. In such stop mode, the changeover rod 80 is stopped at either the normal position N, indicated by solid lines, or is stopped at the reverse position R, indicated by chain-dotted dash lines.

As shown by the solid lines in Figure 6A, when the changeover rod 80 is moved to the normal position N, the projection 85 of the changeover rod 80 presses the arm 69a of the wire spring 69 from inside to outside, so that the wire spring 69 is swung in the direction of arrow k and the other arm 69b of the spring 69 presses the portion 75 of the changeover lever 73 from one side, whereby a torque that acts to swing the changeover lever 73 in the direction of arrow l is generated. Nevertheless, because the driving member 60 is in a state of being moved backward in the direction of arrow j′, the pair of restricting projections 66 and 67 of the driving member 60 are in contact with the pair of restricted projections 76 and 77 of the changeover lever 73, respectively. Consequently, the swinging motion of the changeover lever 73 in the direction of arrow l is prevented, so that the changeover lever 73 is kept in a neutral position against the force of the wire spring 69.

When the changeover rod 80 is in the reverse position R, the pressing projection 85 of the changeover rod 80 presses the other arm 69b of the wire spring 69 from inside to outside, so that the wire spring 69 is swung in the direction of arrow k′ as indicated in chain-dotted lines, and the arm 69a of the spring 69 presses the projection 75 of the changeover lever 73 from the other side. Thus, a torque that acts to swing the changeover lever 73 in the direction of arrow l′ is generated. Nevertheless, the swinging motion of the changeover lever 73 in the direction of arrow l′ is also prevented in this situation by the driving member 60 in the state of being moved in the direction of arrow j′, so that the changeover lever 73 is kept in the neutral position against the forc of the wire spring 69.

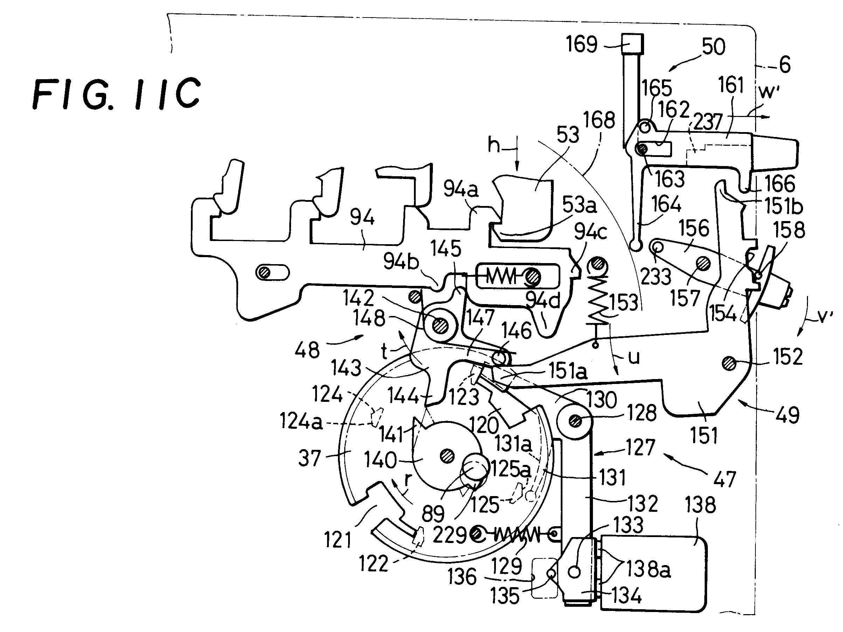

When the playback button 16 is pressed, and with reference to Figure 4, the playback operating rod 53 is moved in the direction of arrow h and the connecting lever 55 is moved in the direction of arrow i against the force of the return spring 58, and then the driving member 60 is moved in the direction of arrow j under the force of the tension spring 64. The playback operating rod 53 will be locked, because a locking pawl 53a thereof is engaged with a locking portion 94a of a locking plate 94 in a forward position. This kind of locking plate is well known and is shown in more detail in Figure 11a. Thus, the driving member 60 is also locked in a forward position. The tension spring 64 functions resiliently to press the connecting lever 55 against the driving member 60 in the forward position thereof.

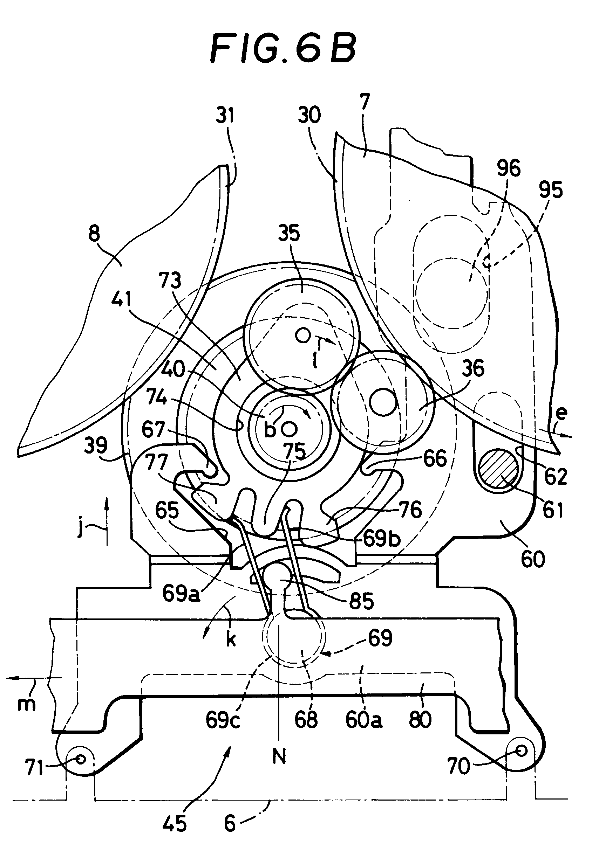

In Figure 6B a state in which the driving member 60 is moved in the direction of arrow j due to a changeover to the playback mode as described above is shown, in which the changeover rod 80 is in the normal position N. More specifically, because of the forward movement of the driving member 60, the pair of restricting projections 66 and 67 are simultaneously separated from the pair of restricted projections 76 and 77, and the wire spring 69 is also moved in the direction approaching the changeover lever 73, so that the arm 69a of the wire spring 69 is relatively pressed by pressing the projection 85 of the changeover rod 80, and the wire spring 69, while being further swung in the direction of arrow k, presses the projection 75 of the changeover lever 73 from one side by the arm 69b of the spring 69. As a result, the restriction on the swinging of the changeover lever 73 is removed and, further coupled with the addition of the force of the wire spring 69, the changeover lever 73 is swung in the direction of arrow l, thereby leading to engagement of the gear 35 with the gear 36. The gear 35 is resiliently pressed against the gear 36 by the force of the wire spring 69, and rotation of the gear 40 in the direction of arrow b is transmitted to the reel base gear 30 through the gears 35 and 36, whereby the reel base 7 is driven in the direction of arrow e, thus, resulting in the playback mode.

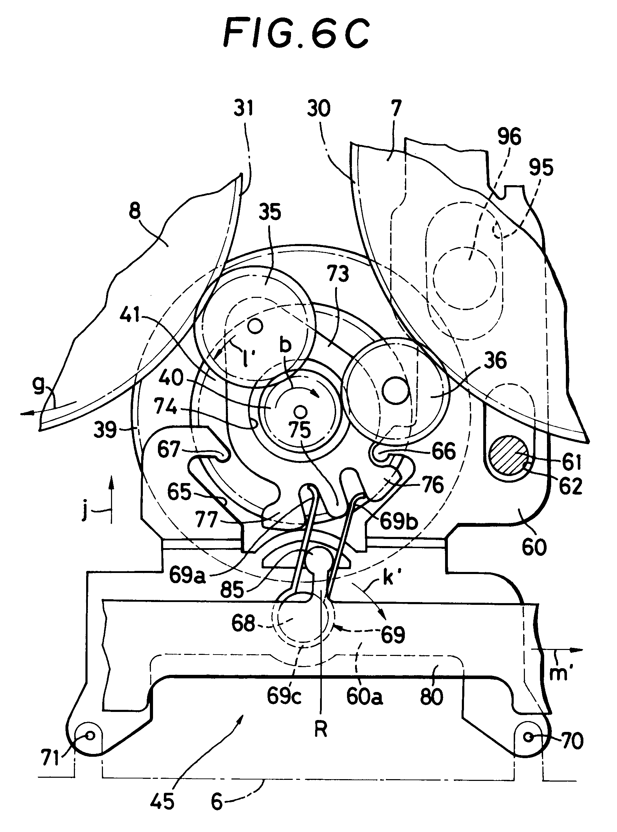

When the magnetic tape 3 comes to the end of the tape in the formal playback mode, the stopping of rotation of the reel base 7 is detected by means of a detector 96, which may comprise a photosensor or the like, arranged in a portion of an elongate hole 95 provided in the dirving member 60. Thus, the partially toothless gear 37 is turned through approximately one-half of a rotation as shown in Figure 4, and then by the cam action of the driving pin 89 of the partially toothless gear 37 and the yoke cam 87 of the changeover rod 80, the changeover rod 80 is driven in the direction of arrow m and is shifted from the normal position N to the reverse position R. When the changeover rod 80 is shifted to the reverse position R, in the direction of arm m′ as in Figures 6B and 6C, the pressing projection 85 of the changeover rod 80 is switched from a state in which one arm 69a of the wire spring 69 is pressed to the state in which the other arm 69b is pressed. Thus, the wire spring 69 is swung in the direction of arrow k′, so that one arm 69a of the wire spring 69 presses the projection 75 of the changeover lever 73 from the other side. At that time, because of the state into which the driving member 60 has been shifted in the direction of arrow j in the playback mode, the changeover lever 73 is not restricted in its swinging motion but is swung in the direction of arrow l′, thereby resulting in the engagement of the gear 35 with the reel base gear 31. The gear 35 is resiliently pressed against the reel base gear 31 by the force of the wire spring 69. Rotation of the gear 40 in the direction of arrow b is transmitted to the reel base gear 31 through the gear 35, and the reel base 8 is driven in the direction of arrow g, so that it assumes the reverse playback mode.

When in the reverse playback mode, the changeover rod 80 is driven in the direction of arrow m and is shifted from the reverse position R to the normal position N, and the changeover lever 73 is again pivoted in the direction of arrow l, as in Figure 6B, so that it assumes the normal playback mode. In this way, the drive of the magnetic tape 3 is selectively switched between normal run and reverse run only through the operation of the changeover rod 80.

When the tape travel is switched to the stop mode by operation of the stop button 17, or by a shut-off motion in the normal playback mode shown in Figure 6B or in the reverse playback mode shown in Figure 6C, the driving member 60 is moved in the direction of arrow j′, as shown in Figure 6A, so that the changeover lever 73 is kept in a neutral position against the force of the wire spring 69. In this case, the wire spring 69 is moved, as shown in solid lines, when changeover to a stop mode takes place in the normal playback mode and, as shown in chain-dotted lines, when changeover takes place in the reverse playback mode. This causes the changeover lever 73 to be kept in a neutral position under a state in which it is pushed resiliently along the direction of arrow l or l′ as to be swingable, as described above. In the changeover mechanism 45, therefore, the normal or reverse playback mode that precedes the stop mode is mechanically memorized by the normal position N or reverse position R of the changeover rod 80 and the wire spring 69, and when a changeover from the stop mode to the playback mode is performed, the tape travel is automatically changed over to normal run (see Figure 6B) or reverse run (see Figure 6C).

In the changover mechanism, the arm 69a or the arm 69b of the U-shaped wire spring 69 is pressed from inside to outside by pressing the projection 85 of the changeover rod 80, and the other arm portion of the wire spring 69 presses the changeover lever 73 so as to swing the changeover lever 73, such that the spring forces are equal in the normal position N and the reverse position R of the changeover rod 80, whereby the gear 35 is resiliently pressed against the gear 36 and the reel base gear 31 under the same conditions.

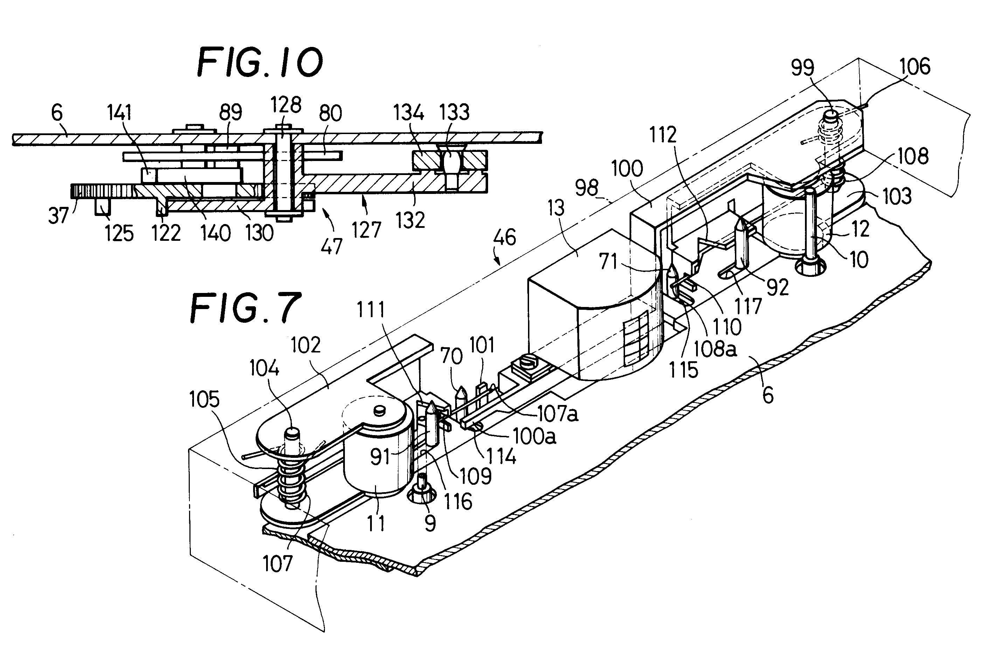

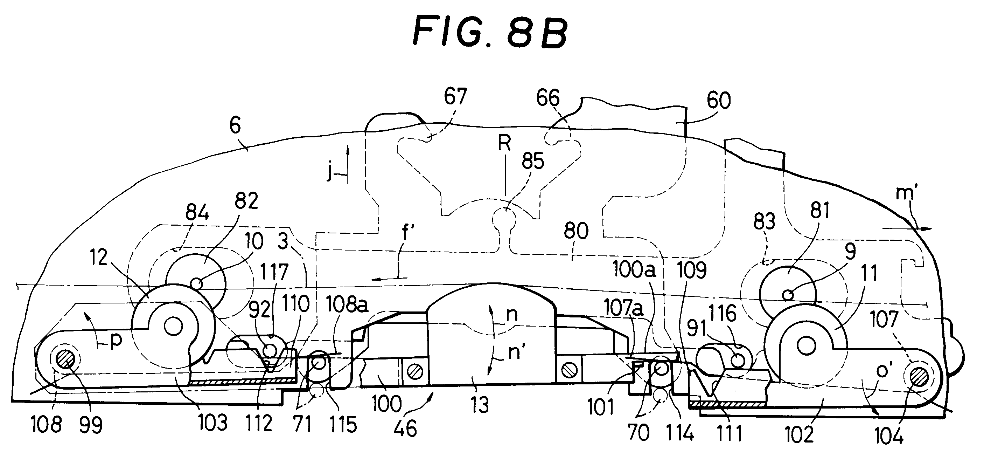

Operation of the head holding mechanism 46 is shown in Figures 7 and 8B. The magnetic head 13 and the pinch rollers 11 and 12 are mounted on a cassette holder 98, which is secured to the chassis 6 for relative free movement. More specifically, a head arm 100 is pivotally affixed to the cassette holder 98 through a shaft 99, so as to be freely rotatable in the directions of arrows n and n′, and the magnetic head 13 is affixed to the head arm 100. The distal end 100a of the head arm 100 extends to the front of one driving pin 70 of the driving member 60, with the distal end 100a being formed with a projection 101. The pinch rollers 11 and 12 are rotatably affixed to pinch roller levers 102 and 103, and the pinch roller levers 102 and 103 are mounted for pivoting movement in the direction of arrows o and o′, p and p′ respectively on a shaft 104 and the shaft 99 respectively. The pinch roller levers 102 and 103 are urged in the directions of arrows o′ and p′ by torsion springs 105 and 106, respectively, which surround the shafts 104 and 99. Other torsion springs 107 and 108 also surround the shafts 104 and 99, and the distal ends 107a and 108a of the torsion springs 107 and 108, respectively, extend over to the front of the pair of driving pins 70 and 71 of the driving member 60, and are engaged with engaging portions 109 and 110 formed in the distal ends of the pinch roller levers 102 and 103, respectively. The distal end 107a of the torsion spring 107 abuts the front side of the projection 101 of the head arm 100, and on the ends of the pinch roller levers 102 and 103 V-shaped notches 111 and 112 are formed in respective correspondence with a pair of restricting pins 91 and 92 of the changeover rod 80.

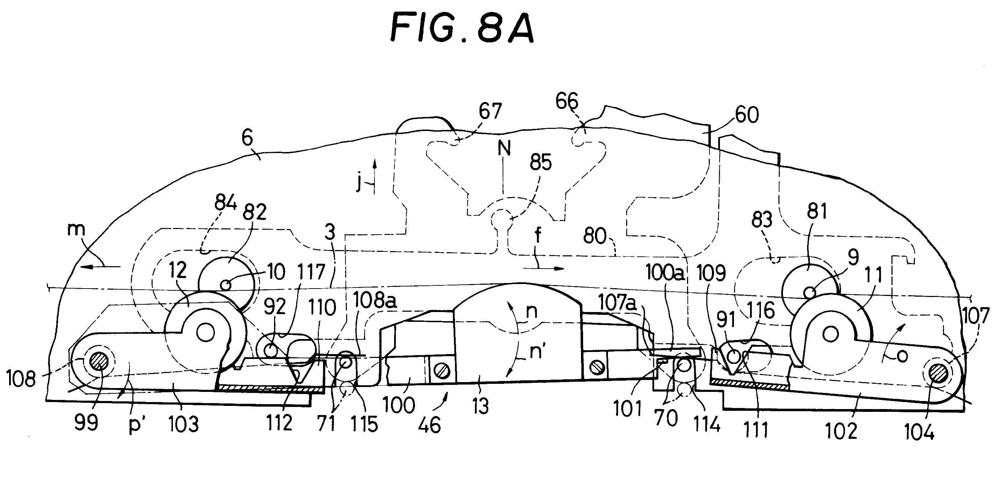

The head holding mechanism 46 operates such that in a stop mode the driving member 60 is moved backward so that the pair of driving pins 70 and 71 are also moved backward, as indicated in chain-dotted lines in Figures 8A and 8B, within a pair of U-shaped notches 114 and 115 formed in the chassis 6. This causes the pinch roller levers 102 and 103 to be pivoted in the direction of arrows o′ and p′ by the torsion springs 105 and 106, respectively, and both the pinch rollers 11 and 12 are separated away from their respective capstans 9 and 10. Simultaneously, the distal end 107a of the torsion spring 107 presses the projection 101 of the head arm 100, so that the head arm 100 is also moved back in the direction of arrow n′, thereby leading to the separation of the magnetic head 13 from the magnetic tape 3.

When the driving member 60 is moved forward in the direction of arrow j for the purpose of a changeover to the normal playback mode, when the changeover rod 80 is in the normal position N, as shown in Figure 8A, the pair of driving pins 70 and 71 are moved forward in the pair of U-shaped notches 114 and 115 and press, respectively, against the leading distal ends 107a and 108a of the torsion springs 107 and 108. At such time, because the changeover rod 80 is in the normal position N, the pair of restricting pins 91 and 92 of the changeover rod 80 are also moved within a pair of elongate holes 116 and 117 formed in the chassis 6, and while one restricting pin 91 is positioned in front of the notched portion 111 of the pinch roller lever 102, the other restricting pin 92 is spaced apart from the notched portion 112 of pinch roller lever 103. As a consequence, only the pinch roller lever 102 is moved forward in the direction of arrow o, whereas the pinch roller 11 is pressed against the capstan 9, and the pinch roller lever 103 is restricted by the restricting pin 92 and kept in the state that it has been moved in the direction of arrow p′, causing the pinch roller 12 to be separated from the capstan 10. Since one driving pin 70 directly presses the distal end 100a of the head arm 100 it is moved forward in the direction of arrow n, and the magnetic head 13 is brought into contact with the magnetic tape 3.

When the changeover rod 80 is moved to the reverse position R, as shown in Figure 8B, the pair of restricting pins 91 and 92 are moved within the elongate holes 116 and 117. The restricting pin 91 moves out of the notched portion 111 of the pinch roller lever 102 and thereby restricts the forward movement of the pinch roller lever 102 in the direction of arrow o, and the pinch roller 11 is separated from the capstan 9. The restricting pin 92 is then moved into the notched portion 112 of the pinch roller lever 102 and the pinch roller lever 103 moves forward in the direction of arrow p, so that the pinch roller 12 is pressed against the capstan 10.

As described above, the pinch rollers 11 and 12 are selectively pressed against, or separated from, the capstans 9 and 10 respectively when the changeover rod 80 is selectively moved between the normal position N and the reverse position R. Further, the pinch rollers 11 and 12 are resiliently pressed against the capstans 9 and 10 by the forces of the torsion springs 107 and 108. Because both distal ends 107a and 108a of the torsion springs 107 and 108 are pressed when the driving member 60 is in the forward position, the changeover of the pinch roller levers 102 and 103 between forward movement and backward movement is smoothly performed simply by applying or removing the restriction on the pinch roller levers 102 and 103.

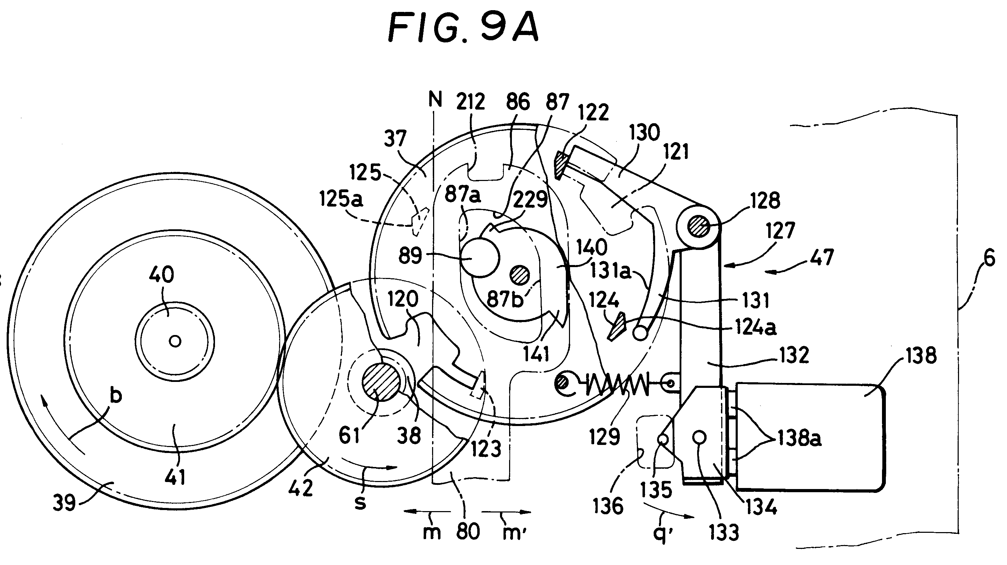

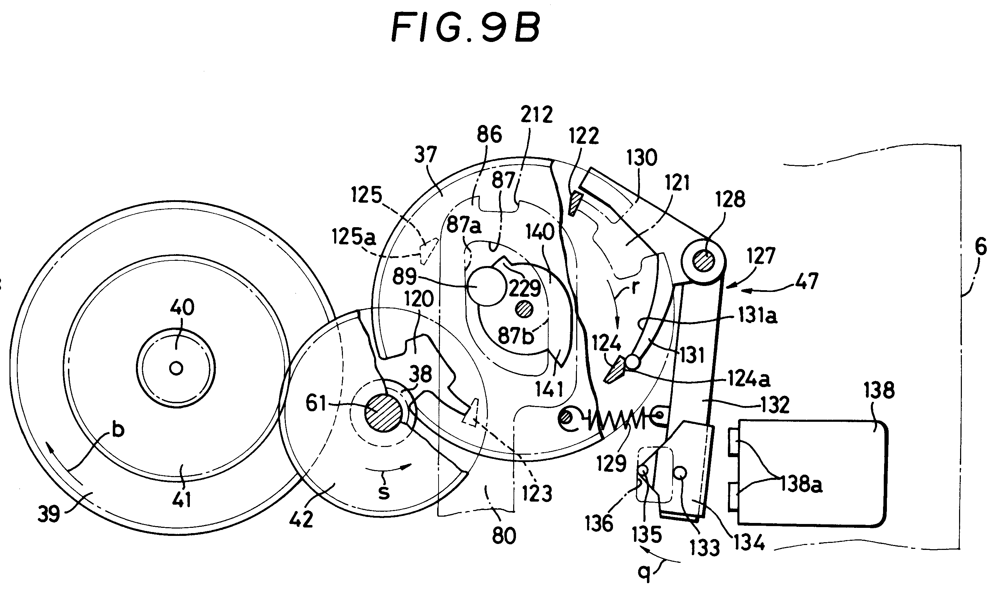

The triggering mechanism 47 is shown in detail in Figure 1 and in Figures 9A to 10, in which the triggering mechanism 47 mechanically provides an initial torque to the partially toothless gear 37, which drives the changeover rod 80 from the normal position N to the reverse position R, or vice-versa. In the partially toothless gear 37, a toothless portion 120 in a normal position and a toothless portion 121 in a reverse position form an angle of 180° with each other, and a normal position locking pawl 122 and a reverse position locking pawl 123 are integrally formed with the partially toothless gear 37 on the lower surface thereof and are located in the vicinity of the toothless portions 121 and 120. On the lower face of the partially toothless gear 37 a normal position cam element 124 and a reverse position cam element 125 are also integrally formed with the partially toothless gear 37 and the cam elements 124 and 125 form an angle of 90° with the respective locking pawls 122 and 123. The cam elements 124 and 125 are of substantially triangular shape and have inclined planes 124a and 125a, respectively.

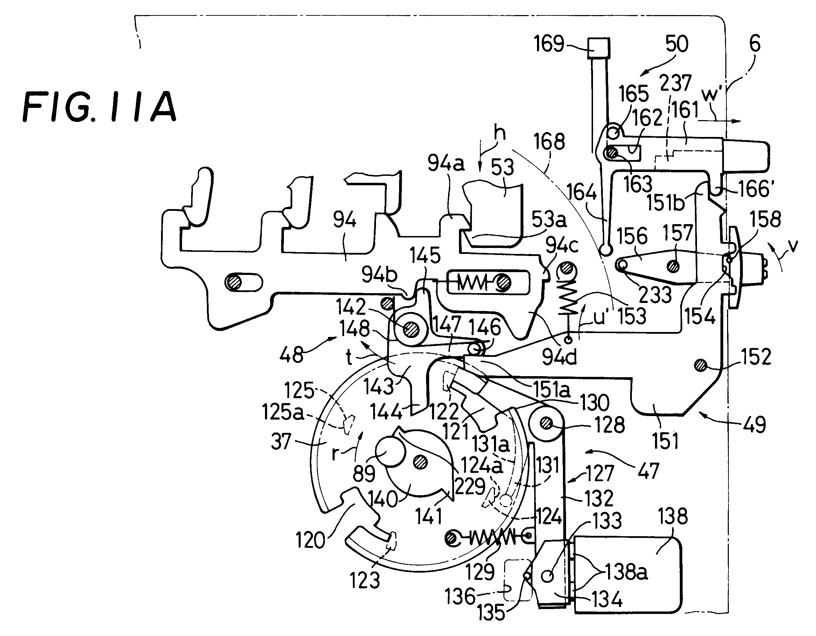

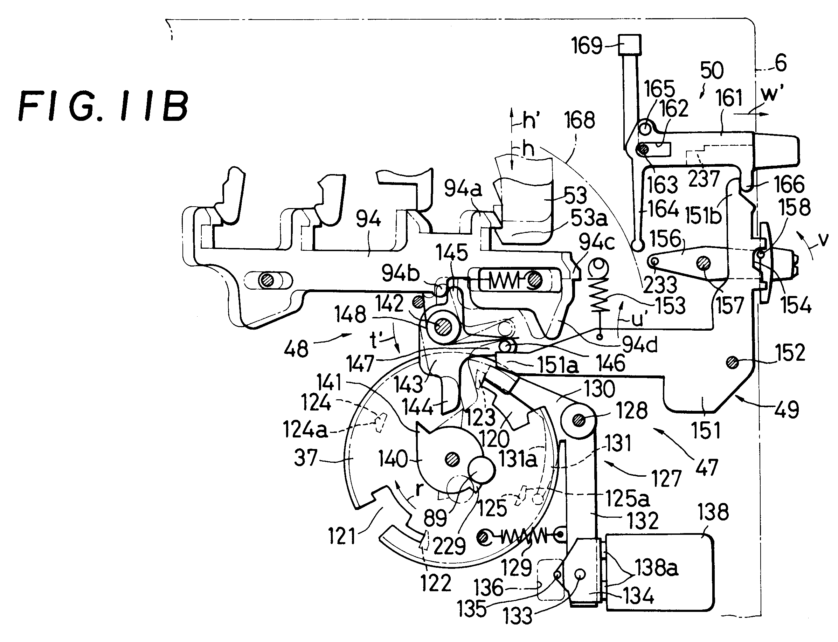

In the vicinity of the partially toothless gear 37 and arranged beneath the chassis 6, a triggering lever 127 is pivotable in the direction of arrows q and q′ on a shaft 128 mounted on the chassis 6 and is urged in the direction of arrow q by a return spring 129 affixed to the chassis 6. The triggering lever 127 is moulded from synthetic resin and includes a locking arm 130 that abuts the locking pawls 122 and 123, a resilient arm 131 for pressing or following the cam elements 124 and 125, and a support arm 132. The locking arm 130 and the resilient arm 131 are formed in a dog leg shape, so as to be in correspondence with the locking pawl 122 and the cam element 124 in the normal position, and in correspondence with the locking pawl 123 and the cam element 125 in the reverse position, and are arranged below the partially toothless gear 37. More specifically, the resilient arm 131 is arcuately shaped. An armature 134 is affixed to the distal end of the support arm 132 and is arranged freely to pivot about a shaft 133. As shown in Figure 10, the shaft 133 is somewhat barrel-shaped, so that an automatic core alignment function is provided to the armature 134. Formed in the distal end of the support arm 132 is an integrally moulded pin 135, which is inserted in an aperture 136 formed in the chassis 6. Beneath the chassis 6 is arranged a solenoid 138, with a core 138a, which is of the armature pull-in type, pulling in the armature 134 and keeping the triggering lever 127 moved backward in the direction of arrow q′.

In operation of the triggering mechanism 47, Figure 9A shows a normal playback mode, in which the armature 134 of the support arm 132 is pulled by the core 138a and the triggering lever 127 is held in a rearward state in the direction of arrow q′. This causes the locking pawl 122 in the normal position of the partially toothless gear 37 to be engaged with the distal end of the locking arm 130, and the partially toothless gear 37 to be locked in the normal position. Accordingly, the toothless portion 120 in the normal position of the partially toothless gear 37 is opposite the driving gear 38, thereby leading to normal drive of the magnetic tape 3.

When in a normal run the tape comes to its end and the end of tape detector 96 detects the stopping of rotation of the reel base 7, an electric current is supplied to the solenoid 138 for an instant. Then, a repelling power is generated between the core 138a and the armature 134 and the pull-in of the armature 134 ceases, thereby causing the triggering lever 127 to be moved forward in the direction of arrow q by the return spring 129. This forward movement releases engagement of the locking arm 30 and the locking pawl 122, thereby releasing the locking of the partially toothless gear 37. Simultaneously, the inclined plane 124a of the normal position cam element 124 is pressed by the distal end of the resilient arm 131, thereby causing the partially toothless gear 37 to be provided with an initial torque in the direction of arrow r and to be engaged with the driving gear 38. Further, the pin 135 of the support arm 132 contacts the side of the aperture 136, thereby stopping the forward movement of the triggering lever 127 in the direction of arrow q.

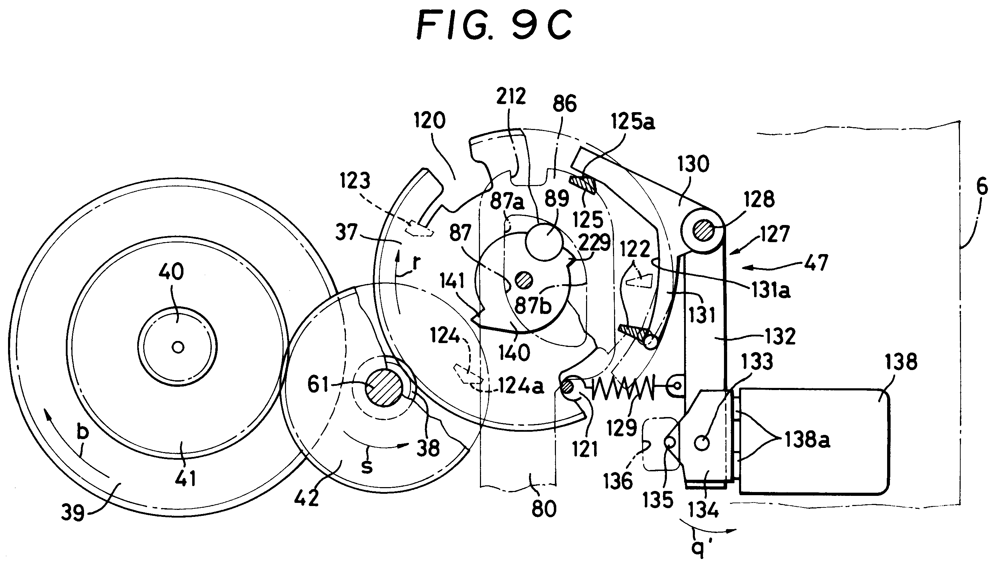

The driving gear 38 is always driven in the direction of arrow s because of the rotation of the driven pulley 24 in the direction of arrow b through the driving gear 41 and the intermediate gear 42, so that the partially toothless gear 37 is driven in the direction of arrow r by the driving gear 38, as shown in Figure 9C. After the partially toothless gear 37 has been rotated through an angle of about 90°, the locking pawl 122 is moved along the inner surface 131a of the resilient arm 131, thereby causing the resilient arm 131 to be gradually tensioned and then the triggering lever 127 to be moved backward in the direction of arrow q′ against the force of the return spring 129, so that the armature 134 is pulled in again by the core 138a of the solenoid 138. Because the armature 134 is mounted on the support arm 132 with an automatic core-alignment arrangement provided by the specially shaped shaft 133, the armature 134 will be pulled in with certainty by the solenoid 138, even though there may be some dimensional errors in the triggering lever 127 due to moulding tolerances, or if there is some mounting error of the solenoid 138.

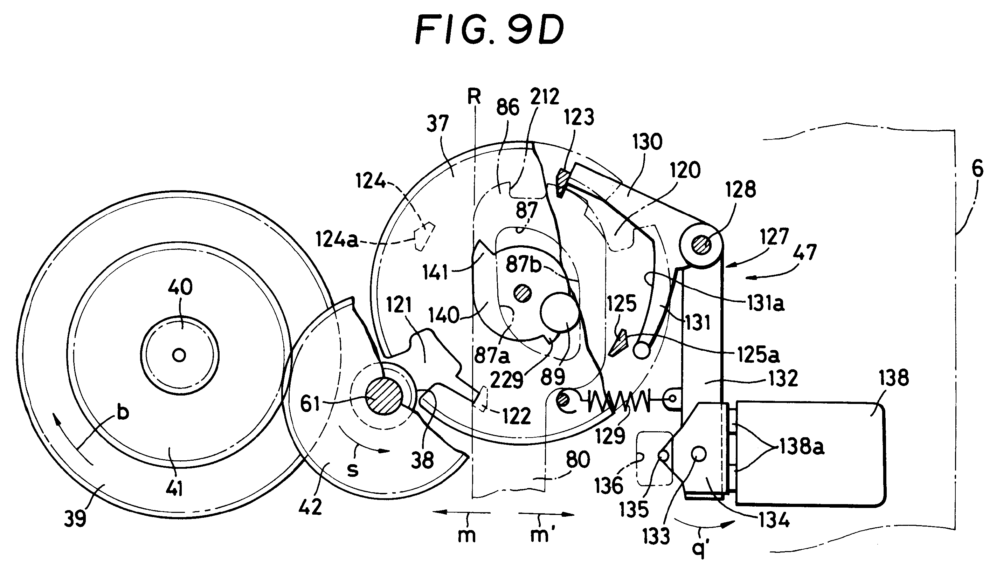

Continued rotation of the partially toothless gear 37 in the direction of arrow r, as shown in Figure 9D, causes the reverse toothless portion 121 to be positioned in opposed relation to the driving gear 38 just after the gear 37 has rotated through an angle of 180°. Simultaneously, the reverse position locking pawl 123 is engaged with the distal end of the locking arm 130, and the partially toothless gear 37 is locked in the reverse position. At this time, the reverse position cam element 125 is positioned in the vicinity of the distal end of the resilient arm 131. When the partially toothless gear 37 is so turned, the changeover rod 80 is driven from the normal position N to the reverse position R by operation of a cam mechanism that includes the driving pin 89 of the partially toothless gear 37 and the yoke cam 87 of the changeover rod 80, thereby causing a changeover from the normal playback mode to the reverse playback mode.

When the tape comes to its end in the reverse run mode, the same motion described above occurs and causes the partially toothless gear 37 to be driven one-half turn from the reverse position to the normal position, and the changeover rod 80 is driven from the reverse position R to the normal position N by such rotary motion. In the triggering mechanism 47 the triggering lever 127 accomplishes the locking and unlocking of the partially toothless gear 37 in the normal position and in the reverse position by use of the locking arm 130; accomplishes provision of the initial torque to the partially toothless gear 37 by use of the resilient arm 131; accomplishes the backward movement of the triggering lever 127 by using the rotation of the partially toothless gear 37; and accomplishes retention of the triggering lever 127 in the rearmost state by using the support arm 132. The triggering lever 127 and the changeover mechanism 45 are used for providing the initial mechanical drive motion to the partially toothless gear 37. As described in Figure 6B, because the pressing projection 85 presses the arm 69a of the wire spring 69 as the changeover rod 80 is moved to the normal position, movement in the direction of the reverse position R develops action by means of the reactive force of the wire spring 69 on the changeover rod 80. Figure 9A then shows that the driving pin 89 of the partially toothless gear 37 is pressed in the direction of arrow m′ by a cam profile 87a of the yoke cam 87 on the changeover rod 80. This causes the partially toothless gear 37 to be provided with initial rotary drive motion from the changeover rod 80 thereby unlocking the partially toothless gear 37 from the normal position. On the other hand, as shown in Figure 6C, when the changeover lever 80 is shifted to the reverse position R it undergoes a moving force in the direction of the normal position N by means of the reactive force of the wire spring 69. Accordingly, as shown in Figure 9D, the driving pin 89 of the partially toothless gear 37 is pressed in the direction of arrow m by a cam profile 87b of the yoke cam 87 formed in the changeover rod 80, the cam profiles 87a and 87b extending in parallel to one another. This causes unlocking of the partially toothless gear 37 from the reverse position and causes the initial turning effect from the changeover rod 80 to be applied to the partially toothless gear 37.

The operation of the shut-off mechanism 48 is shown in Figure 1 and Figures 11A-11D, in which the shut-off mechanism 48 operates to develop shut-off motion at the time of the changeover of the magnetic tape 3 from the reverse direction run to the normal direction run. Integrally moulded on the upper surface of the partially toothless gear 37 is a hub 140, and on the circumferential surface thereof is a driving pawl 141 that is positioned to go behind the locking pawl 123 along the turning direction of the partially toothless gear 37. A shut-off lever 143 is pivoted on a shaft 142, which is mounted in the chassis 6, for free rotary movement between the partially toothless gear 37 and the locking plate 94. The shut-off lever 143 includes a driven pawl 144 that projects from the shut-off lever 143 on the side of the partially toothless gear 37, a driving pawl 145 that contacts a projection 94b of the locking plate 94 and a projection 147 having a pin 146 in its distal end, all such elements being integrally moulded with the shut-off lever 143. The shut-off lever 142 is urged in the direction of arrow t by a torsion spring 148 that reacts against the chassis 6 and acts on the pin 146.

In the operation of the shut-off mechanism 48, Figure 11A shows a state in which the partially toothless gear 37 is locked as described above in the normal position and when the tape ends in the normal direction run, the partially toothless gear 37 is driven one-half turn in the direction of arrow r and is locked in the reverse position as indicated by the solid lines in Figure 11B. At such time the driving pawl 141 of the partially toothless gear 37 is located in the vicinity of the driven pawl 144 of the shut-off lever 143 and during the one-half turn of driving movement of the partially toothless gear 37, the driving pawl 141 does not cooperate with the shut-off lever 143 and operation is therefore switched automatically from the normal direction run to the reverse direction run.

When a tape end in the reverse direction run is followed by the one-half turn of movement of the partially toothless gear 37 in the direction of arrow r from the reverse position, in that instant the driving pawl 141 of the partially toothless gear 37 contacts the driven pawl 144 of the shut-off lever 143, as indicated in chain-dotted lines in Figure 11B, and the shut-off lever 143 is rotated in the direction of arrow t′ against the force of the torsion spring 148. This causes the projection 94b of the locking plate 94 to be pressed by the driving pawl 145 of the shut-off lever 143, and the locking plate 94 to be moved as indicated in chain-dotted lines, thereby releasing the engagement of the locking pawl 53a of the playback operating rod 53 with the locking portion 94a. This results in shut-off motion for automatic changeover from the reverse playback mode to the stop mode. Subsequently, the partially toothless gear 37 is rotated in the direction of arrow r and is locked again in the normal position.

A mode changing mechanism 49 is shown in detail in Figure 1 and Figures 11A to 11D, in which beneath the chassis 6, an L-shaped mode changing lever 151 is pivoted on a shaft 152, which is mounted on the chassis 6, so as to be freely rotatable in the direction of arrows u and u′, and is urged by a return spring 153 attached between the changeover lever 151 and the chassis 6. The end of one arm 151a of the mode changeover lever 151 extends adjacent the shut-off lever 143 and contacts the pin 146 of the shut-off lever 143. As a consequence, the rotation of the shut-off lever 143 in the direction of arrow t is restricted by the mode changing lever 151. A notched portion 154 is formed in the other arm of the mode changing lever 151 and beneath the chassis 6 an operating lever 156 is held in a right-angle relationship with said other arm of the mode changeover lever 151 so as to be freely pivoted in the direction of arrows v and v′ on a shaft 157, which is mounted on the chassis 6. A pin 158 is integrally moulded with the operating lever 156 and engages the notched portion 154 of the mode changing lever 151.

Figure 11B illustrates a state in which when the operating lever 156 is changed over in the direction of arrow v, the mode changing mechanism 49 is switched to a one-cycle round-trip mode. Thus the pin 158 of the operating lever 156 enters the notched portion 154 of the mode changing lever 151 and the mode changing lever 151 is rotated in the direction of arrow u′ by the return spring 153. As a consequence, the pin 146 of the shut-off lever 143 contacts the end 151a of the mode changing lever 151, with the shut-off lever 143 being held in the position shown in solid lines. This enables the shut-off lever 143 to be changed over to a working state, so that shut-off motion is developed at the moment that the partially toothless gear 37 is rotated from the reverse position to the normal position, as described above. In other words, in this one-cycle round-trip mode, the travel of the magnetic tape 3 is automatically stopped after the reverse direction run that occurs following a normal direction run. As shown in Figure 11C, when the operating lever 156 is changed over in the direction of arrow v′, the pin 158 of the operating lever 156 is moved from the inside of the notched portion 154 of the mode changing lever 151, thereby causing the mode changing lever 151 to be rotated in the direction of arrow u against the force of the return spring 153. Then, with the end 151a of the mode changing lever 151 being shifted, the shut-off lever 143 is rotated in the direction of arrow t by the torsion spring 148, and the driven pawl 144 thereof is moved away from being within the locus of the driving pawl 141 of the partially toothless gear 37. As a result, the shut-off lever 143 is changed over into a non-functional state, and the driving pawl 141 passes the driven pawl 144 without contacting it, even when the partially toothless gear 37 is rotated from the reverse direction position to the normal direction position. That is, in such a repeat play mode, the magnetic tape 3 is continuously run by repeating the normal run and reverse run.

A changeover means 50 is shown in detail in Figure 1 and Figures 11A to 11D in which a changeover rod 161 is arranged beneath the chassis 6 and is arranged for free reciprocal movement in the direction of arrows w and w′ by interaction of an elongage hole 162 and a guide pin 163 which is mounted on the chassis 6. A resilient arm 164, a pin 165, and a projection 166 are integrally moulded of synthetic resin to form the changeover rod 161. By reaction of the distal end of the resilient arm 164 with an arcuately shaped, raised portion 168 of the chassis 6, the changeover rod 161 can be moved in the direction of arrow w′. A switch 169 formed as a leaf switch is arranged in the vicinity of the pin 165, and a projection 166 contacts the end 151b of the other arm of the mode changing lever 151.

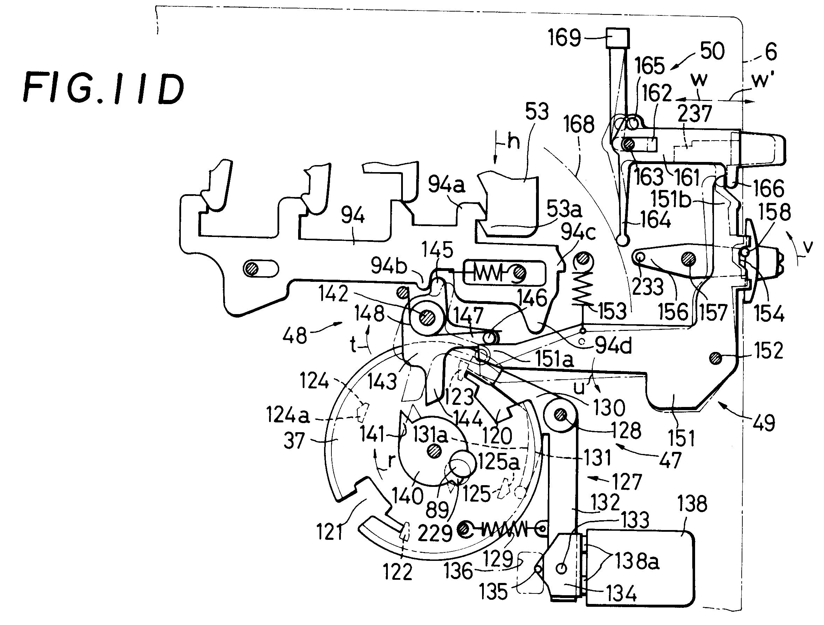

In operation of the changeover means 50, when the changeover rod 161 is pushed in the direction of arrow w to the position indicated in chain-dotted lines in Figure 11D, the switch 169 is actuated by the pin 165 of the changeover rod 161. The solenoid 138 is instantaneously energized and the triggering mechanism 47 is put into action as described above, thereby starting rotation of the partially toothless gear 37. If the mode changing mechanism 49 has been switched to a repeat mode at a time when the mechanism is as shown in Figure 11C, there is no shut-off motion developed upon changeover from reverse run to normal run, so that changeover is selectively conducted between normal run and reverse run by depressing the changeover rod 161. If the mode changing mechanism 49 has been switched to a one-cycle round-trip mode, as shown in Figure 11B, however, because shut-off motion is developed upon changeover from reverse run to normal run, the mode changing mechanism 49 is shut-off, when the changeover rod 161 is depressed at the time of reverse run.

By means of the changeover mechanism 50, however, when the changeover rod 161 is pushed in the direction of arrow w when the mode changing mechanism 49 has already been switched over to a one-cycle round-trip mode, as indicated in chain-dotted lines in Figure 11D, the end 151b of the other arm of the mode changing lever 151 is pressed by the projection 166 of the changeover rod 161, and the mode changing lever 151 is forcibly rotated in the direction of arrow u against the force of the return spring 153, as indicated in chain-dotted lines. More specifically, the mode changing mechanism 49 is forcibly switched over to a repeat mode, as shown in Figure 11C, when the changeover rod 161 is depressed, so that there is no shut-off motion developed upon changeover to be carried out selectively between normal run and reverse run.

The shut-off lever 143 is switched over to a non-functioning state by forcible rotation of the mode changing lever 151 only while the changeover rod 161 is being depressed, but because the partially toothless gear 37 is rotated immediately when the changeover rod 161 is depressed, there is no shut-off motion, but changeover to normal run has already been implemented by the time the mode changing lever 151 is moved backward by releasing the changeover rod 161.

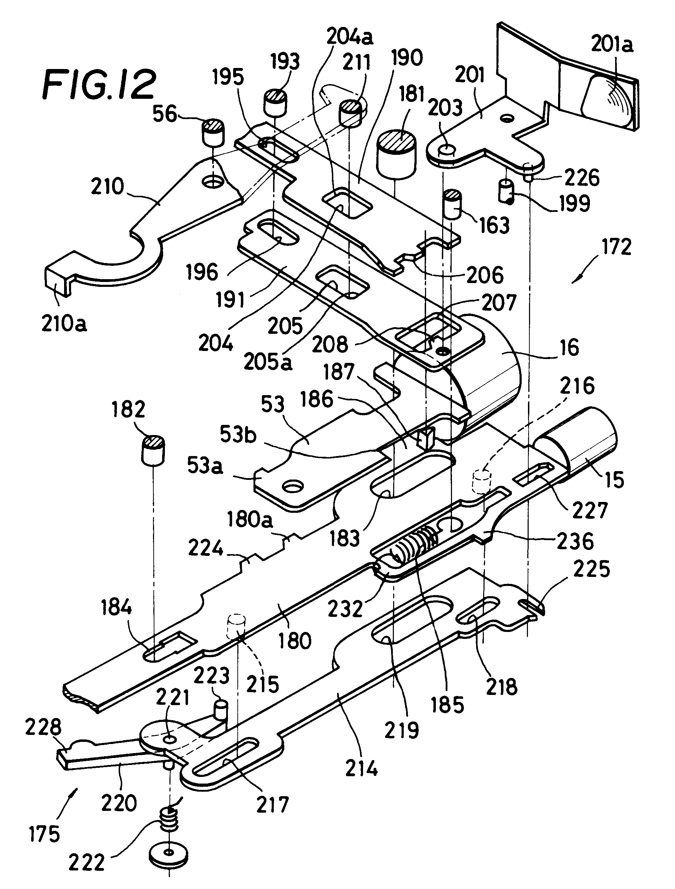

The recording mechanism 172 is shown in detail in Figure 1 and Figures 12 to 13C, in which the record button 15 is affixed to one end of a record initiating rod 180 arranged beside the playback operating rod 53 beneath the chassis 6. The record initiating rod 180 is constructed so as to be freely movable forward and backward in the directions of arrows A and A′ by coooperation between elongate holes 183 and 184 and guide pins 181 and 182, which are mounted on the chassis 6, and is moved backward and urged in the direction of arrow A′ by a return spring 185 stretched between the record initiating rod 180 and the guide pin 163 that was used for the changeover rod 161. The record initiating rod 180 has a projection 186, which is engaged with a notched portion 53b provided in the playback operating rod 53, and a triangular prism-shaped lock pin 187 is arranged adjacent and above the projection 186 of the record initiating rod 180.

Mounted beneath the chassis 6 are two detecting rods 190 and 191 for the respective A side and B side of the tape cassette 4, which detect independently of each other the presence of the two tabs 173 and 174 for the A side and B side of the cassette 4, are arranged crossing at right angles to the playback operating rod 53 and the record initiating rod 180, respectively. The detecting rod 190 for the A side is constructed for free reciprocal movement in the directions of arrows B and B′ by cooperation between elongate holes 194 and 195 and guide pins 192 and 193, respectively, which are mounted on the chassis 6, while the detecting rod 191 for the B side is constructed for free reciprocal movement in the directions of arrows C and C′ by being arranged beneath the detecting rod 190 and having the guide pin 193 cooperate with an elongage hole 196. Both detecting rods 190 and 191 are moved backward and mutually urged in the directions of arrows B′ and C′ by a tension spring 197 that is stretched between the detecting rods. Detecting levers 200 and 201 are held so as to be freely rotated on shafts 198 and 199, which are mounted on the chassis 6, and are connected to the ends of the detecting rods 190 and 191 by pins 202 and 203, respectively. The detecting levers 200 and 201 have detecting projections 200a and 201a projecting above the chassis 6, and rectangular holes 203 and 205 are formed in the portion where both detecting rods 190 and 191 are placed. A locking pawl 206 comprising a projection is formed on the other end of the detecting rod 190 of the A side, while a locking pawl 208 comprising a projection is formed in the portion of a hole 207 on the other end of the detecting rod 191 for the B side. The lock pin 187 of record initiating rod 180 is inserted in the hole 207 from the lower part and is located between the two locking pawls 206 and 208.

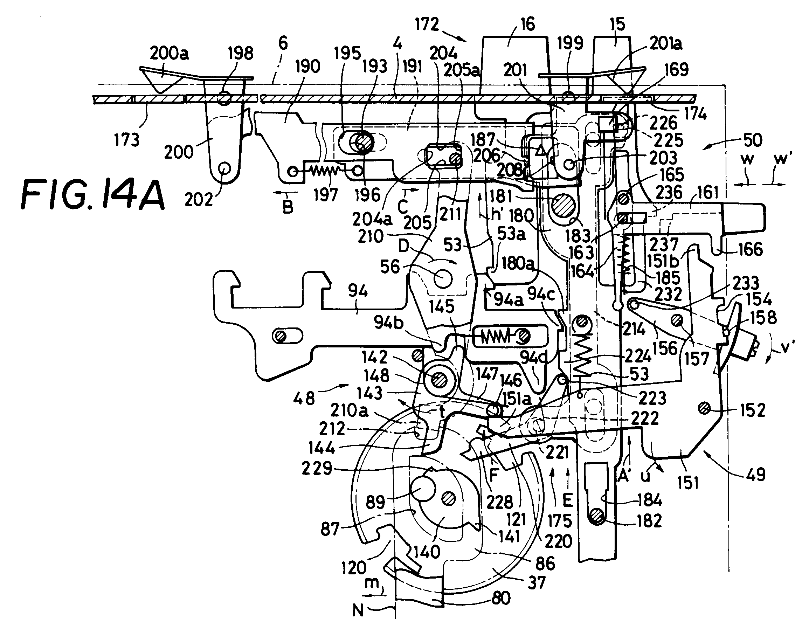

Beneath the chassis 6, a controlling lever 210 is held so as to be freely pivoted in the directions of arrows D and D′ on the shaft 56 of the connecting lever 55, and a pin 211 mounted on one end portion of the controlling lever 210 is inserted in the rectangular holes 204 and 205 of the detecting rods 190 and 191. In the other end portion of the controlling lever 210 is formed a pawl 210a, which is engaged with a notched portion 212 formed in the distal end of the arm 86 of the changeover rod 80, as shown in Figure 14A.

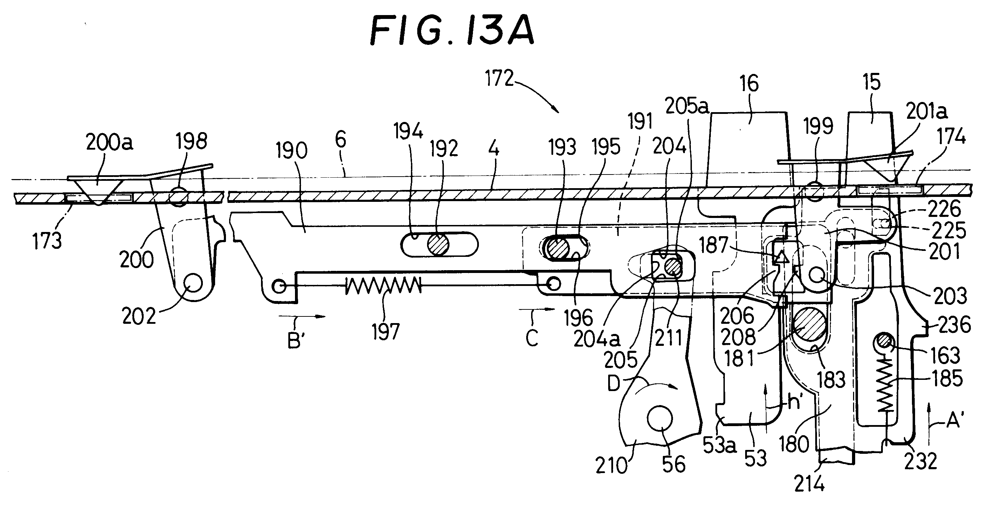

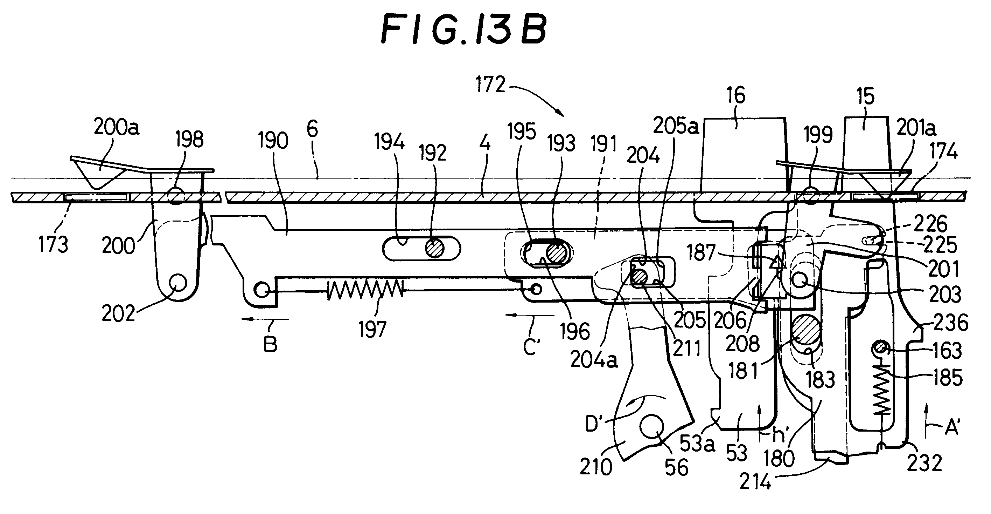

Figure 13A shows the state in which shift of the changeover rod 80 to the normal position causes the controlling lever 210 to be pivoted in the direction of arrow D. One of the parallel rims 205a of the rectangular hole 205 in the detecting rod 191 for side B is pressed by the pin 211 of the controlling lever 210, and the detecting rod 191 is retained in an unlocking position where it is moved forward in the direction of arrow C against the force of the tension spring 197. This causes the locking pawl 208 of the detecting rod 191 to be separated from the lock pin 187 of the record initiating rod 180 and, because the detecting rod 190 for side A is not restricted by the pin 211 of the controlling lever 210, it is controlled in a state permitting its reciprocal movement between the unlocking position, in which it is moved forward in the direction of arrow B, and the locking position, in which it is moved backward in the direction of arrow B′.

When the changeover rod 80 is located at normal position N, the detecting rod 190 for side A independently detects the tab 173 for side A of the cassette 4. In the case where the tab 173 for side A has been removed, as shown in Figure 13A, because the detecting projection 200a of the detecting lever 200 is not restricted, the detecting rod 190 is moved backward to a locking position in the direction of arrow B′ by the tension spring 197. This causes the locking pawl 206 of the detecting rod 190 to be engaged with the lock pin 187 of the record initiating rod 180, so that the record initiating rod 180 is locked at the position of backward movement in the direction of arrow A′. Consequently, the record button 15 cannot be pressed and, thus, there is no possibility of a changeover to the record mode.

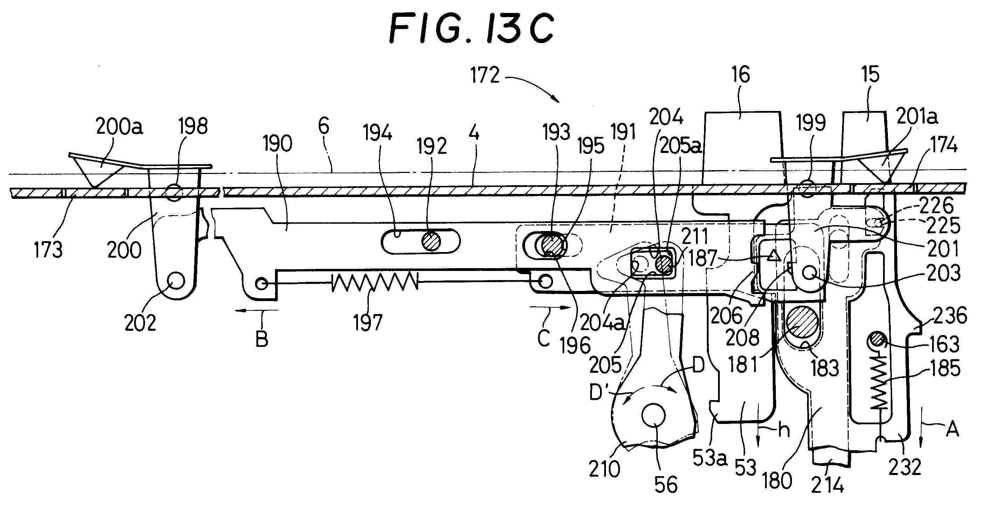

If the tab 173 for side A of cassette 4 has not been removed, as shown in Figure 13C, because the detecting projection 200a of the detecting lever 200 is restricted at the tab 173, the detecting lever 200 is turned around, and the detecting rod 190 is moved forward to an unlocking position in the direction of arrow B against the force of the tension spring 197. This allows the locking pawl 206 of the detecting rod 190 to be separated from the locked pin 187 of the record initiating rod 180, so that locking of the record initiating rod 180 at a rearward position is released. Consequently, by depressing the record button 15, the record initiating rod 180 is moved forward in the direction of arrow A, thereby enabling changeover to a record mode.

Figure 13B shows the changeover rod 80 having been shifted to a reverse position R and, because the controlling lever 210 is swung in the direction of arrow D′, one of the parallel rims 204a of the rectangular hole 204 of the detecting rod 190 for side A is pressed by the pin 211 of the controlling lever 210, and the detecting rod 190 is retained at an unlocking position, in which it is moved forward in the direction of arrow B against the force of the tension spring 197. Because the detecting rod 191 for side B is not restricted by the pin 211 of the controlling lever 210, it is controlled in a state that it can be moved reciprocally between an unlocked position, in which it is moved forward in the direction of arrow C, and a locked position, in which it is moved backward in the direction of arrow C.

Accordingly, when the changeover rod 80 is located in the reverse position R, the detecting rod 191 for side B independently detects the tab 174 for the side B face of the cassette 4. When the tab 174 for side B has been removed, the detecting rod 191 is moved backward to a locked position in the direction of arrow C′ by the tension spring 197, which causes the locking pawl 208 of the detecting rod 191 to be engaged with the lock pin 187 of the record initiating rod 180, so that the record initiating rod 180 is locked at a rearward position in the direction of arrow A′.

When the tabe 174 for side B is present, as shown in Figure 13C, the detecting lever 201 is turned around and is moved forward to an unlocked position in the direction of arrow C against the force of the tension spring 197. This causes the locking pawl 208 of the detecting rod 191 to be separated from the lock pin 187 of the record initiating rod 180, so that locking of the record initiating rod 180 in the rearward position is released. Therefore, when the record button 15 is depressed, the record initiating rod 180 is moved forward in the direction of arrow A, thereby enabling changeover to the record mode.

Even if it is not possible to record at the normal run or reverse run due to the absence of the tabs 173 and 174 for side A or side B of cassette 4, shifting the changeover rod 80 selectively to reverse position R or normal position N without removing and turning the cassette 4 enables the record operation in reverse run or normal run only when there are tabs 174 and 173 for side A face or side B under the aforementioned state. It should be noted, in addition, that a shift of the changeover rod 80 can be attained by operation of the changeover means 50, as described hereinabove.

The shut-off mechanism 175 is shown in detail in Figures 1, 12, and Figure 14F. A shut-off changeover rod 214 of the shut-off mechanism 175 is laid over and arranged beneath the record operating rod 180, and is constructed for free reciprocal movement in the directions of arrows E and E′ by co-operation between elongatye holes 217, 218, and 219 and guide pins 215 and 216, which are mounted on the record initiating rod 180, and the guide pin 181, respectively. In the distal end of the shut-off changeover rod 214 a shut-off lever 220 is retained so as to be freely turned in the directions of arrows F and F′ on a shaft 221 of the shut-off lever 220 and is urged in the direction of arrow F by a torsion spring 222. In the shut-off lever 220 is formed a pin 223, which contacts a projection 224 formed in the record initiating rod 180, a U-shaped notch 225 is formed in the other end portion of the shut-off changeover rod 214, and a pin 226 is formed in the detecting lever 201 of the detecting rod 191 for the side B face and is engaged with the notch 225 by penetrating an elongate hole 227 in the record operating rod 180. As a consequence, the shut-off changeover rod 214 is constructed so as to be reciprocally moved in the directions of arrows E and E′ by turning of the detecting lever 201, that is, the reciprocal motion of the detecting rod 191 caused by the presence of the tab 174 for side B.

In operation of the shut-off mechanism 175, Figure 14A shows a state in which the changeover rod 80 is at the normal position N in a stop mode and in which the tab 173 for side A is present, but the tab 174 for side B is not present. Because the changeover rod 80 remains at the normal position N, the controlling lever 210 is pivoted in the direction of arrow D, thereby causing the detecting rod 190 for side A to be controlled so as to be freely reciprocated and, because the tab 173 for side A is present, the detecting rod 190 is moved forward to an unlocking position in the direction of arrow B, thereby enabling changeover to a record mode.

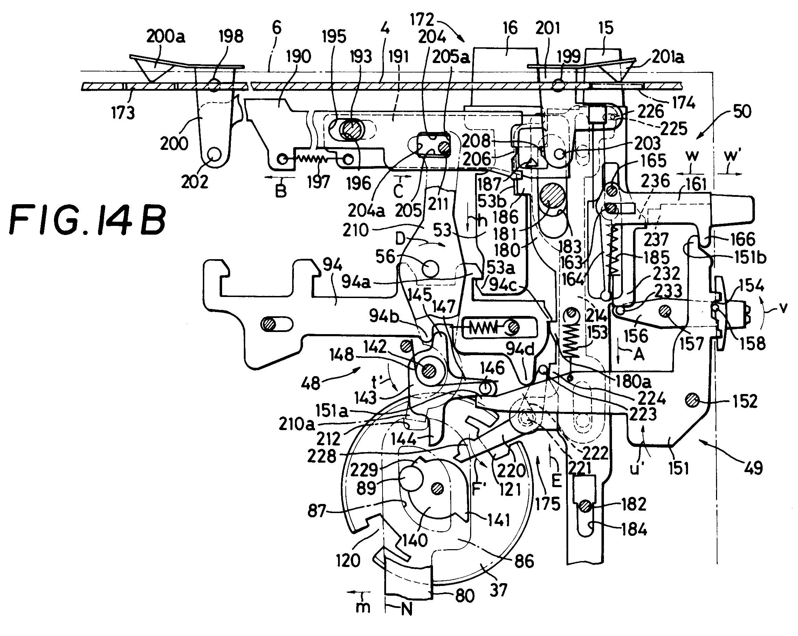

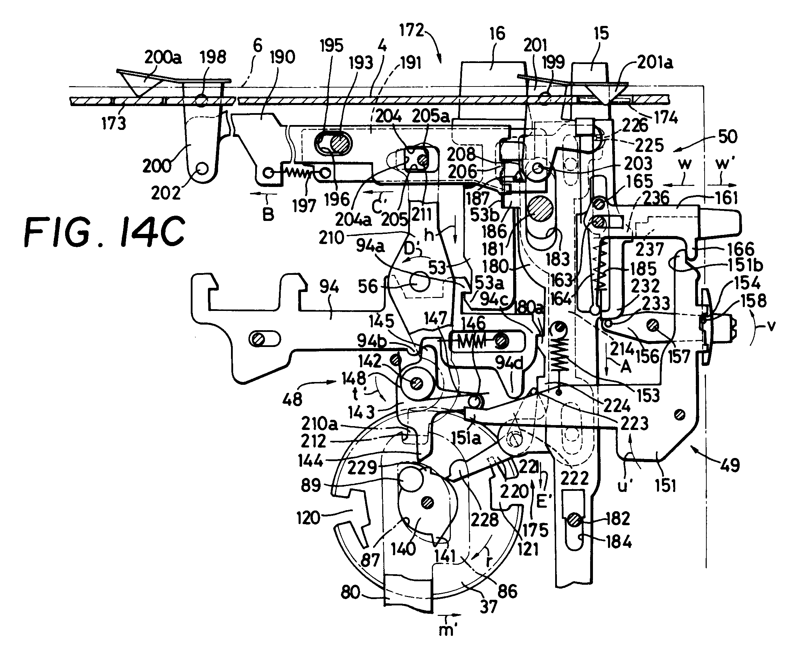

When the record button 15 is depressed, as shown in Figure 14B, the record initiating rod 180 is moved forward in the direction of arrow A, leading to changeover from a stop mode to a record mode. Because the projection 185 of the record initiating rod 180 pushes the notched portion 53b of the playback operating rod 53 by such time, the playback operating rod 53 is also moved forward in the direction of arrow h, so that the locking pawl 53a in engaged with the locking pawl 94a of the locking plate 94 and is then locked. The record initiating rod 180 is also engaged with the locking pawl 94c of the locking plate 94 and is then also locked at the position of forward movement, which results in a normal record mode, just as the normal playback mode described hereinabove.

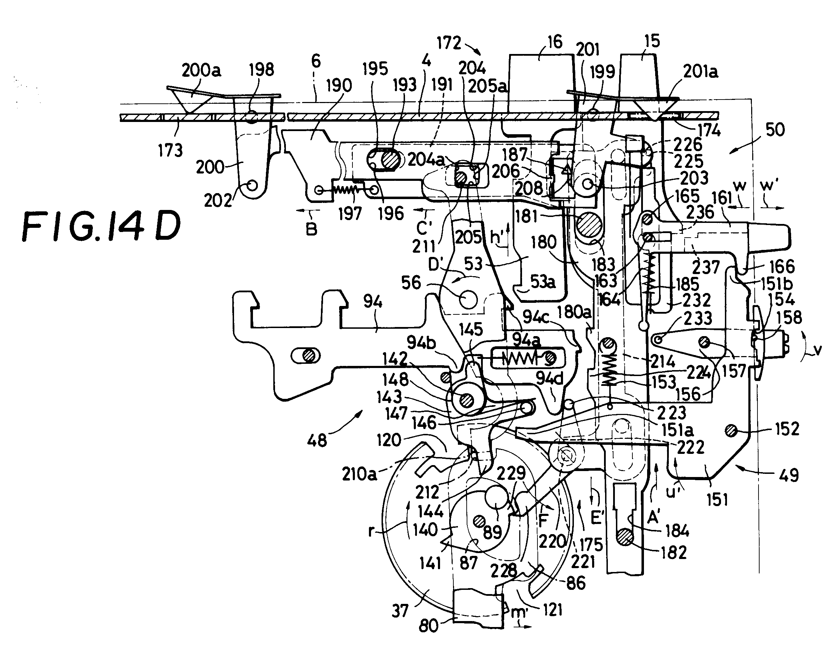

When the magnetic tape 3 comes to its end in the normal run of a normal record mode, the partially toothless gear 37 is rotated in the direction of arrow r, as shown in Figure 14C, thereby leading to the start of a shift of the changeover rod 80 from normal position N to reverse position R. At that moment, the controlling lever 210 is pivoted in the direction of arrow D′, and the detecting rod 191 for side B is in turn controlled so as to be freely reciprocated. The detecting projection 201a of the detecting lever 201 is, therefore, not restricted because of the absence of the tab 174 for side B, and the detecting lever 201 is turned around by the backward movement of the detecting rod 191 in the direction of arrow C′. The turn-around of the detecting lever 201 causes the shut-off changeover rod 214 to be moved backward in the direction of arrow E′, and a driven pawl 228 in the distal end of the shut-off lever 220 to be moved into the turning locus of a driving pawl 229 formed in the partially toothless gear 37. In other words, the shut-off mechanism 175 for the record mode is switched over to the functional state. Rotation of the partially toothless gear 37 in the direction of arrow r, as shown in Figure 14D, causes the driving pawl 229 to contact the driven pawl 228 of the shut-off lever 220 and the shut-off lever 220 is turned around in the direction of arrow F′ against the force of the torsion spring 22. With the projection 94d of the locking plate 94 pressed by the pin 223 of the shut-off lever 220 the locking plate 94 is shifted, thereby causing the record operating rod 180 to be unlocked, as well as the playback operating rod 53 to be unlocked, thus, resulting in a stop mode. In this way, when there is no tab 174 for side B, upon changeover from normal run to reverse run, shut-off motion is automatically developed at the time of such changeover.

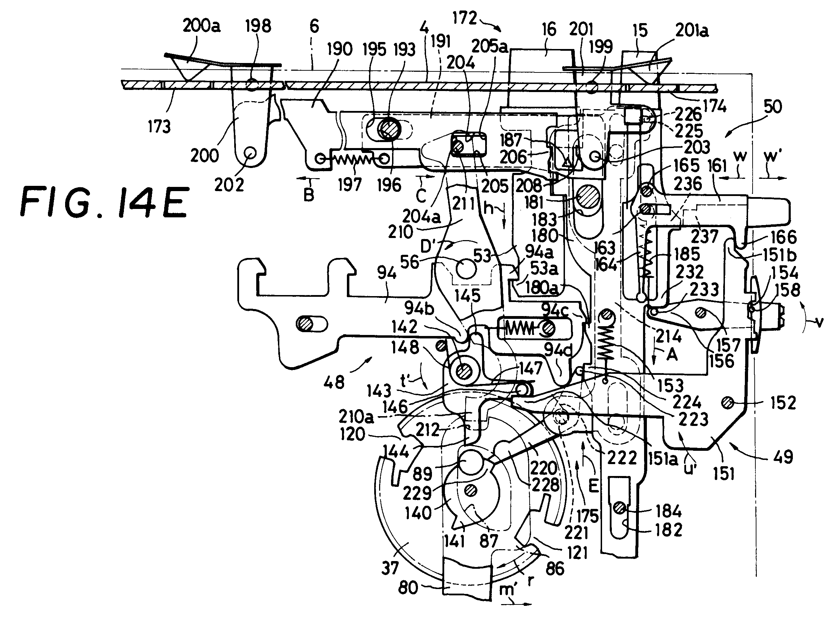

As shown in Figure 14E, when there is a tab 174 for side B, even if the detecting rod 191 for side B is moved freely forward and backward at the time of changeover from normal run to reverse run, the shut-off changeover rod 214 is kept in the state of forward movement in the direction of arrow E, because the detecting projection 201a of the detecting lever 201 is restricted by the tab 174 and the detecting lever 201 is not turned around. In other words, the driven pawl 228 of the shut-off lever 220 is moved away from inside the turning locus of the driving pawl 229 of the partially toothless gear 37, so that the shut-off mechanism 175 is switched to a non-functioning state. Even when the partially toothless gear 37 is rotated in the direction of arrow r, the driving pawl 229 does not contact the driven pawl 228 but passes it by resulting in no shut-off motion being developed. That is, changeover is conducted from normal run to reverse run while staying in record mode, thereby leading to reverse record in continuation from normal record.

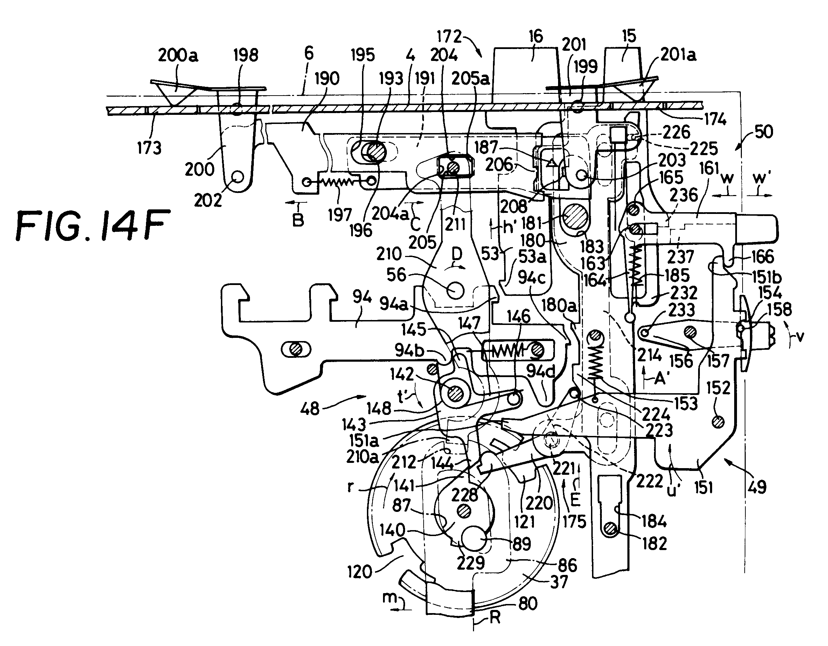

Thereafter, when the end of the tape is reached during reverse run of a reverse record mode, the shut-off lever 143 is driven as in Figure 14F and is then switched automatically from a reverse record mode to a stop mode in the same manner as shut-off after reverse playback, as described hereinabove. In other words, shut-off after reverse recording is used jointly by the shut-off mechanism 48 after reverse playback.

As shown in Figure 14A, when the record initiating rod 180 is being moved backward to the rearward position in the direction of arrow A′, the shut-off lever 220 of the shut-off mechanism 175 for recording is turned around in the direction of arrow F by the torsion spring 222, because it is not pressed by the projection 224 of the record initiating rod 180. Even though the shut-off lever 220 is put into the repeat mode, which was described hereinabove, in a playback mode the shut-off lever 220 is not driven by the driving pawl 141. When switched to a record mode, as shown in Figure 14B, the pin 223 of the shut-off lever 220 is pressed by the projection 224 of the record initiating rod 180 and is then turned around in the direction of arrow F′, and is further inserted in the turning locus of the driving pawl 229 when there is no tab 174 for side B, as shown in Figure 14C.

In a record mode, as described above, at the time of changeover from normal run to reverse run, shut-off is automatically conducted so long as there is no tab 174 for side B, and changeover is automatically carried out to reverse run when there is a tab 174 for side B.

The state of the mode changing mechanism 49 in a record mode is shown in detail in Figure 1 and Figures 14A to 14F, in which a pin 233 is integrally moulded at the distal end of the operating lever 156 of the mode changing mechanism 49, and the record initiating rod 180 is provided with a pressing portion 232 comprising a projection that presses the pin 233. More specifically, the operating lever 156 is arranged crossing at right angles with the record initiating rod 180, and the distal end of the operating lever 156 is inserted in the moving locus of the pressing portion 232 of the record initiating rod 180.

By the above-described mode changing mechanism 49, when the record initiating rod 180 is in the rearward position, as shown in Figure 14A, the pin 233 of the operating lever 156 is not pressed by the pressing portion 232 of the record initiating rod 180, and the operating lever 156 is forcibly turned around in the direction of arrow V. Accordingly, even when the mode changing mechanism 49 is switched to repeat mode at the time of changeover to a record mode, it forcibly becomes a round-trip mode in a record mode and the record initiating rod 180 is moved forward. In other words, it is shut-off by all means after record in the reverse run and is never switched from reverse run again to normal run.

The changeover means 50 shown in detail in Figure 1 and in Figures 14A to 14F, shows a projection 237 integrally moulded with the changeover rod 161 of the changeover mechanism 50, and a restricting portion 236 comprising a projection that contacts the projection 237 is provided in the record initiating rod 180. That is, the changeover rod 161 is arranged crossing at right angles with the record initiating rod 180, and the restricting portion 236 of the record initiating rod 180 is constructed so as to be inserted in the moving locus of the projection 237 of the changeover rod 161.

By operation of the changeover mechanism 50, when the record initiating rod 180 is in the rearward position, as showing in Figure 14A, the projection 237 of the changeover rod 161 is not retained by the restricting portion 236 of the recording initiating rod 180, so that in a playback mode normal run and reverse run can be selectively changed over upon occasion by letting the changeover rod 161 be moved forward in the direction of arrow W, as described hereinbelow. When switched to a record mode, as shown in Figure 14B, however, the restricting portion 236 of the record initiating rod 180 is inserted in the moving locus of the projection 237 of the changeover rod 161. In other words, the changeover rod 161 is locked in a state that it is moved backward in the direction of arrow W′ which represented the state of changeover inability. Consequently, in a record mode there is no possibility of selective changeover between normal run and reverse run.

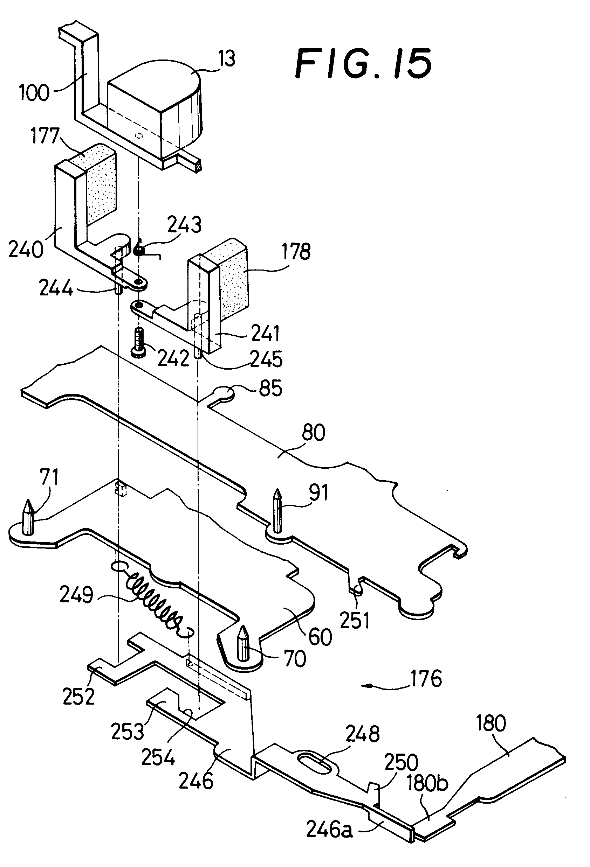

In the erase head moving mechanism 176 shown in detail in Figure and in Figures 15 to 16B, the erase heads 177 and 178 for normal run and reverse run are mounted on erase head holding levers 240 and 241, respectively, which are pivotably secured to the head arm 100 on a shaft 242. The erase head levers 240 and 241 are urged by a torsion spring 243 in a direction so as to be separated from the magnetic tape 3. In addition, pins 244 and 245 are formed integrally with the respective erase head levers 240 and 241. On the side of the changeover rod 80, a driving lever 246 is constructed for free reciprocal motion in the direction of arrows G and G′ and to be freely turned around in the directions of arrows H and H′ by co-operation between an elongate hole 248 and a guide pin 247, which is mounted on the chassis 6. The driving lever 246 is moved forward in the direction of arrow G by a tension spring 249 stretched from the driving lever 246 to a driving rod 60 and on the side of an end portion 246a of the driving lever 246 is formed a projection 250, which is intended for contact with a projection 251 formed in the changeover rod 80. A pair of L-shaped pressing projections 252 and 253 are formed in the other end portion of the driving lever 246 extended below the erase heads 177 and 178, with the side of one pressing projection 253 having a groove 254, and an end portion 246a of the driving lever 246 is pressed by an end portion 180b of the record initiating rod 180.

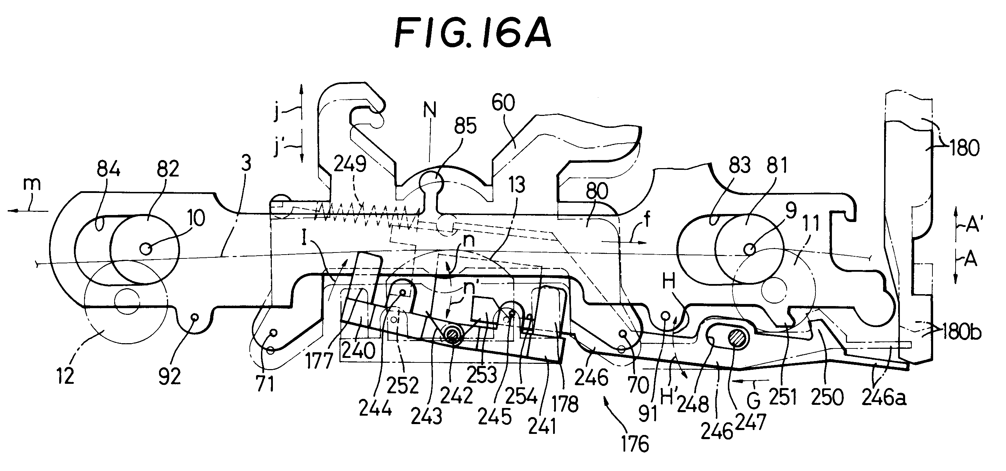

In operation of the erase head driving mechanism 176, when the record initiating rod 180 is moved forward in the direction of arrow A and is then switched to a record mode as indicated in chain-dotted lines and solid lines in Figure 16A, the end portion 246a of the driving lever 246 is pressed by the end portion 180b of the record initiating rod 180, and the driving lever 246 is then turned around in the direction of arrow H. Because the driving lever 246 has been moved forward in the direction of arrow G, by action of the tension spring 249 in this embodiment, when the changeover rod 80 has been moved to the normal position, one pressing projection 252 of the driving lever 246 is inserted in the pin 244 of the erase head lever 240 for the normal run, and the other pressing projection 253 comes off the pin 245 of the erase head lever 241 for reverse run, with the pin 245 being located in the groove 254. When the driving lever 246 is turned around in the direction of arrow H, consequently, the pin 244 is pressed by one of the pressing projections 252, and one erase head lever 240 alone is turned around in the direction of arrow I against the force of the torsion spring 243, thereby causing the erase head 177 alone to contact magnetic tape 3.

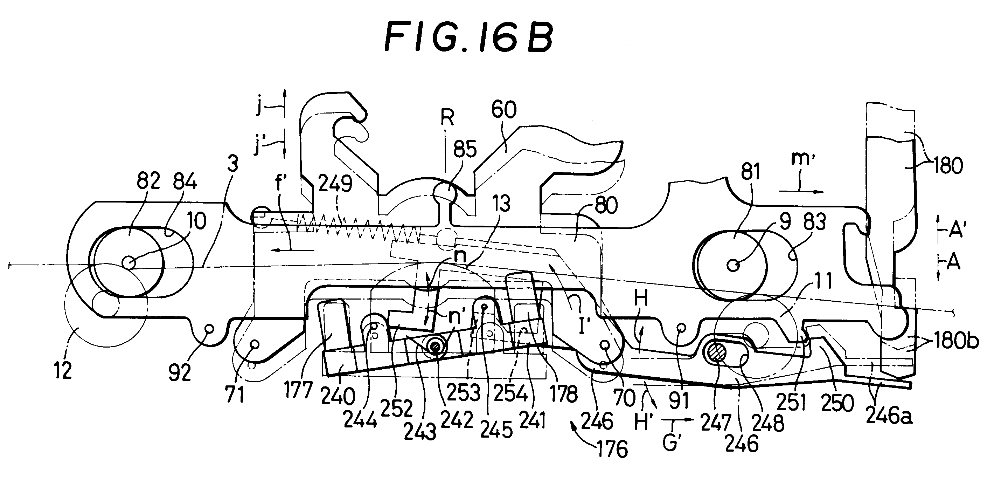

When the changeover rod 80 has been moved to the reverse position R, as shown in Figure 16B, the projection 250 of the driving lever 246 is pressed by the projection 251 of the changeover rod 80, and the driving lever 246 is moved backward in the direction of arrow G′ against the force of the tension spring 249. Then, one pressing projection 252 of the driving lever 246 comes off the pin 244 and, simultaneously, the other pressing projection 253 is located in the portion of the pin 245. When the driving lever is turned around in the direction of arrow H, accordingly, the pin 245 is pressed by the other pressing projection 253, and the other erase head lever 241 alone is turned around in the direction of arrow I′ against the force of the torsion spring 243, so that only the erase head 178 is in contact with the magnetic tape 3.

Further at the time of changeover from normal run to reverse run in a record mode, the driving lever 246 is moved backward in the direction of arrow G′, just as it is turned around in the direction of arrow H, but the erase head 178 for reverse run contacts the magnetic tape 3 simultaneously with the erase head 177 for normal run being separated from the magnetic tape 3. Thus, the two erase heads 177 and 178 are selectively driven in correspondence with normal run and reverse run by the one driving lever 246, so that the two erase heads 177 and 178 are driven continuously and smoothly, even during a time of changeover between normal run and reverse run.

Although only one embodiment has been described above, it should be understood that the invention is not limited to such an embodiment but is capable of wide variation within the scope of the appended claims. For example, the changeover, shut-off mechanism, mode changing mechanism, and so on are not limited to the structure of this embodiment but are able to meet the application of various structures. Furthermore, the shut-off mode as referred to is described as a one-cycle round trip mode that is to stop the tape after a reverse run following a normal run, but it is also possible, for example, to provide the shut-off pawl 141 of the shut-off mechanism 148 in two places and add a one-way mode, in which the tape is stopped after the normal run, in place of the one-cycle round-trip mode.

In this embodiment, in addition, a structure was provided so as to cause the changeover rod 161 of the changeover mechanism 50 to be locked in the state of rearward movement by the restricting portion 236 of the record initiating rod 180, but it is possible to apply various alterations to such a structure. Also, a structure was designed so as to get the operating lever 156 of the mode changing mechanism 49 to be forcibly turned around by the pressing portion 232 of the record initiating rod 180, but this changeover structure can be altered in various ways.

## Claims

1. An auto-reverse tape recording apparatus comprising:
a changeover mechanism (45) selectively to change travel of a tape (3) from a normal run to a reverse run by operation of changeover means (50);
a mechanism for detecting an end of the tape;
a shut-off mechanism (48) to shut off travel of the tape (3) near a tape end; and
a mode changing mechanism (49) effective to changeover an operating mode of the apparatus from a shut-off mode to a repeat mode, in which repeat mode the travel of the tape is repeatedly performed from normal run to reverse run, and in which shut-off mode the travel of the tape is shut off by the shut-off mechanism (48) as soon as the tape end is detected;
characterised in that in the shut-off mode the travel of the tape is ended after a normal run or after a reverse run, which reverse run may have followed a normal run, and wherein the apparatus further comprises switch means including an operating lever (156), a mode changeover lever (151) and a manual changeover rod (161), wherein the mode changeover lever (151) has an arm with an end (151b) which can be moved by a projection (166) of the changeover rod upon operation of the manual changeover rod (161) and the operating lever (156) has a pin (158) thereon which engages in a notched portion (154) of the operating lever (156) whereby the operating lever (156) is moved by operation of the mode changeover lever (151) so that the operating mode of the apparatus is changed over to a repeat mode if the changeover means (50) is operated while the mode changing mechanism (49) is in the shut-off mode.

2. Auto-reverse tape recording apparatus according to claim 1, wherein the changeover mechanism (45) comprises a changeover rod (80) which is movable to either a normal position or a reverse position, a cam mechanism (87,89) for driving the changeover rod (80), and a gear which is driven by operation of the changeover means.

3. Auto-reverse tape recording apparatus according to claim 2 wherein the changeover rod (80) includes means (70, 71) selectively pressing one of respective pinch rollers (11, 12) provided in opposed relations to a pair of capstans (9, 10) against one of the capstans and means for moving an intermediate wheel (34) so as selectively to transmit the torque of a driving wheel (24) to either of a pair of reel bases (7, 8).

4. Auto-reverse tape recording apparatus according to claim 1, wherein the changeover mechanism (45) comprises a changeover rod (80) which is slidable for location in either a normal position or a reverse position, a partially toothless gear (37) which is rotatable and has a cam mechanism (87, 89) for driving the changeover rod (80) and has toothless portions (120, 121) provided in predetermined peripheral portions thereof, a driving gear (38) for intermittently driving the partially toothless gear (37), locking means (122, 123, 127) for locking the partially toothless gear in a position where the driving gear (38) and one of the toothless portions (120, 121) of the partially toothless gear are in opposed relation to each other, means (47) for providing an initial torque to the partially toothless gear so as to engage the partially toothless gear (37) with the driving gear (38), and means for unlocking the partially toothless gear, whereby the partially toothless gear is unlocked by operation of the changeover means (50) and engaged with the driving gear, so that rotation of the partially toothless gear driven by the driving gear is transmitted to the changeover rod (80) through the cam mechanism so as to move the changeover rod to either a normal position or a reverse position.

5. Auto-reverse tape recording apparatus according to claim 4, wherein the locking means comprises a triggering lever (127) capable of engaging with a locking pawl (122, 123) provided on the partially toothless gear, and an electromagnet (134, 138) for holding the triggering lever (127) in either of two positions engaged with or disengaged from the locking pawl (122, 123), whereby the triggering lever (127) is moved to either of the two positions through controlling an electric current supplied to a solenoid (138) of the electromagnet by operation of the changeover means (50).

6. Auto-reverse tape recording apparatus according to claim 5, wherein the electric current supplied to the solenoid is controlled when the tape end is detected, so that the triggering lever (127) is swung to the unlocked position.

7. Auto-reverse tape recording apparatus according to claim 4, wherein the number of the toothless portions (120, 121) and of the locking pawls (122, 123) of the partially toothless gear are two, respectively and the two toothless portions and the two locking pawls are each symmetrically arranged with respect to the centre of the partially toothless gear.

8. Auto-reverse tape recording apparatus according to claim 1, wherein the shut-off mechanism (175) comprises a playback operating rod (53) changeable from a stop mode in a return position to a playback mode in a forward position, locking means (53a) for locking the playback operating rod (53) in the forward position, a shut-off lever (143) for driving the locking means (53a) so as to unlock the playback operating rod (53), and a gear (38, 140) which has a driving pawl (141) for driving the shut-off lever (143) to unlock the playback operating rod (53) and which is driven when a tape end is detected.

9. Auto-reverse tape recording apparatus according to claim 8, wherein the mode changing mechanism (49) comprises the shut-off lever (143), and the mode changing lever (151) by which the shut-off lever (143) is swung from a shut-off mode position where the driving pawl (141) is engageable, to a repeat mode position where the driving pawl (141) is not engageable, so that the mode changing mechanism (49) swings the shut-off lever in the shut-off mode position toward the repeat mode position by operation of the changeover means.

10. Auto-reverse tape recording apparatus according to claim 9, wherein the mode changing lever of the mode changing mechanism (151) is swung not in the repeat mode position but in the shut-off mode position by operation of the changeover means.

11. Auto-reverse tape recording apparatus according to claim 8, wherein both of the cam mechanism (87, 89) for driving the changeover rod (80), and the driving pawl (141) for driving the shut-off lever (143) are provided on the partially toothless gear (37), the partially toothless gear being unlocked when the tape end is detected and meshed with the driving gear (38), so that the shut-off lever (143) is driven by the driving pawl (141) due to rotation of the partially toothless gear.

12. Auto-reverse tape recording apparatus according to claim 1, comprising a record initiating rod (180) including a restricting portion (236), in which by a movement from a return position to a forward position either a stop mode or a playback mode is changed over to a record mode; and
a projection (237) on the manual changeover rod (161) which can engage in the restricting portion (236) of the rod (180), so that in the record mode the manual changeover rod (161) is prevented from moving thereby making the changeover means (50) inoperable at a time of record mode after the movement of the record initiating rod (180) to the forward position.

13. Auto-reverse tape recording apparatus according to claim 12, wherein the record initiating rod (80) prevents the operation of the changeover means (50) only in the forward position thereof but not in the return position.

14. Auto-reverse tape recording apparatus according to claim 12, wherein the changeover mechanism comprises a changeover rod (80) which is movable and located in either a normal position or a reverse position, and a gear (37) which has a cam mechanism (87,89) for driving the changeover rod (80) and is rotated by operation of the changeover means (50).

15. Auto-reverse tape recording apparatus according to claim 12, wherein the changeover mechanism comprises a changeover rod (80) which is slidable and located in either a normal position or a reverse position, a partially toothless gear (37) which is rotatable and has a cam mechanism (87, 89) for driving the changeover rod and has toothless portions (120, 121) provided in predetermined portions thereof, locking means (122, 123) for locking the partially toothless gear in position where a driving gear (38) for intermittently driving the partially toothless gear (37) and either of the toothless portions are in opposed relation to each other, means (127) for giving an initial torque to the partially toothless gear so as to engage the partially toothless gear with the driving gear, and means for unlocking the partially toothless gear, wherein the partially toothless gear is unlocked by operations of the changeover means (50) and engaged with the driving gear (38), so that rotation of the partially toothless gear driven by the driving gear is transmitted to the changeover rod (80) through the cam mechanism so as to move the changeover rod (80) to either of the normal position and the reverse position.

16. Auto-reverse tape recording apparatus according to claim 15, wherein the locking means comprises a triggering lever (127) for engaging with a locking pawl (122, 123) provided on the partially toothless gear (37), and an electromagnet (134, 138) for holding the triggering lever (127) in either of two positions, engaged with or disengaged from the locking pawl (122, 123), whereby the triggering lever (127) is moved to either of the two positions by controlling an electric current supplied to a solenoid (138) of the electromagnet by operation of the changeover means.

17. Auto-reverse tape recording apparatus according to claim 16, wherein the number of the toothless portions (120, 121) and the locking pawls (122, 123) of the partially toothless gear are two, respectively and the two toothless portions and the two locking pawls are each symmetrically arranged with respect to the centre of the partially toothless gear.

18. Auto-reverse tape recording apparatus according to claim 14, wherein the changeover rod (80) at least includes means for selectively pressing one of a pair of respective pinch rollers (11, 12) provided in opposed relations to a pair of capstans (9, 10) against one of the capstans, and means for moving an intermediate wheel (34) so as selectively to transmit the torque of a driving wheel (24) to either of a pair of reel bases (7, 8).

19. An auto-reverse type tape recorder with a stop mode, a playback mode and a recording mode comprising:
a tape end mechanism for detecting a tape end;
a shut-off mechanism (48) for shutting off the travel of a tape (3) due to detection of a tape end;
a mode changing mechanism (49) for changing over an operating mode of the apparatus from a shut-off mode to a repeat mode, in which shut-off mode travel of the tape is shut off by the shut-off mechanism (48) as soon as the tape end is detected after a normal run or after a reverse run, which reverse run may have followed a normal run, and in which repeat mode the travel of the tape is repeatedly performed from a normal run to a reverse run; and
switch means for changing over the mode changing mechanism (49) from the repeat mode to the shut-off mode so that the travel of the tape is shut-off as soon as the tape end is detected after a normal run or a reverse run when the tape recorder is in the record mode;
characterised in that the tape recorder further comprises a record initiating rod (180), for movement from a return position to a forward position by which either the stop mode or the playback mode is changed over to the record mode;
wherein the switch means includes an operation lever (156) having a pin (233) thereon cooperating with a pressing portion (232) formed as a projection on the record initiating rod, and a mode changeover lever (151) with a notched portion (154) and a pin (158) on the operating lever (156) which engages in the notched portion (154) to effect changeover of the mode changing means (49) from the repeat mode to the shut-off mode so that travel of the tape is shut-off as soon as the tape end is detected after a reverse run following a normal run when the record initiating rod (180) is moved to the forward position.

20. A tape recorder according to claim 19, wherein the shut-off mechanism (48) comprises an operating rod (53) changeover from a stop mode in a return position to a playback mode or a record mode in a forward position, locking means (53a) for locking the operating rod (53) in the forward position, a shut-off lever (143) for driving the locking means so as to unlock the operating rod, and a gear (38, 140) which has a driving pawl (141) for driving the shut-off lever (143) so as to unlock the operating rod, in which the shut-off lever is driven when a tape end is detected.

21. A tape recorder according to claim 20, wherein the mode changing mechanism (49) comprises the shut-off lever (143) and a mode changing lever (151) by which the shut-off lever (143) is swung from a one-way mode position or a round-trip mode position where the driving pawl (141) is engageable, to a repeat mode position where the driving pawl (141) is not engageable, or the reverse, so that the means for changing over the mode changing mechanism has such a function so as to move the shut-off lever (143) to the one-way mode position or the round-trip mode position by operation of the mode changing lever (151) located in the repeat mode position, when the record initiating rod (180) is moved toward the forward position.

22. A tape recorder according to claim 19, wherein the shut-off mechanism (49) comprises a partially toothless gear (37) which is rotatable and has a driving pawl (141) for driving the shut-off lever (143) and has toothless portions (120, 121) provided in predetermined positions thereof, a driving gear (38) for intermittently driving the partially toothless gear, locking means (122, 123, 127) for locking the partially toothless gear (37) in a position where the driving gear and the toothless portion of the partially toothless gear are in opposed relation to each other, means (138) for giving an initial torque to the partially toothless gear so as to engage the partially toothless gear with the driving gear (38) and means for unlocking the partially toothless gear, whereby the partially toothless gear is unlocked when the tape end is detected, and meshed with the driving gear, the shut-off lever (143) being driven by the driving pawl due to rotation of the partially toothless gear.

23. A tape recorder according to claim 22, wherein the locking means comprises a triggering lever (127) capable of engaging with a locking pawl (122, 123) provided on the partially toothless gear, and an electromagnet (134, 138) for holding the triggering lever (127) in either of two positions engaged with or disengaged from the locking pawl, whereby the triggering lever is moved to either of the two positions through controlling an electric current supplied to a solenoid (138) of the electromagnet due to detection of tape end.

24. A tape recorder according to claim 23, wherein the number of the toothless portions (120, 121) and the locking pawls (122, 123) of the partially toothless gear are two, respectively and the two toothless portions and the two locking pawls are symmetrically arranged with each other and with respect to the centre of the partially toothless gear (37).

## Patentansprüche

1. Bandaufzeichnungsvorrichtung mit automatischer Richtungsumkehr, die umfaßt:
einen Umschaltmechanismus (45), um wahlweise den Lauf eines Bandes (3) aus einem Normallauf in einen Umkehrlauf durch Betätigung von Umschaltmitteln (50) zu ändern;
einen Mechanismus zum Ermitteln eines Bandendes;
einen Abschaltmechanismus (48) zum Abschalten des Laufs des Bandes (3) in der Nähe eines Bandendes; und
einen Betriebsumschaltmechanismus (49), der wirksam ist, um eine Betriebsart der Vorrichtung von einem Abschaltbetrieb auf einen Wiederholbetrieb umzuschalten, bei dem der Lauf des Bandes wiederholt aus dem Normallauf zum Umkehrlauf durchgeführt wird, und bei dem der Abschaltbetrieb des Laufs des Bandes durch den Abschaltmechanismus (48) abgeschaltet wird, sobald das Bandende ermittelt wird;
dadurch gekennzeichnet, daß
beim Abschaltbetrieb der Lauf des Bandes nach einem Normallauf oder nach einem Umkehrlauf beendet wird, wobei der Umkehrlauf einem Normallauf gefolgt sein kann, und wobei die Vorrichtung weiter Schaltmittel aufweist, die einen Betätigungshebel (156), einen Betriebsumschalthebel (151) und einen handbetriebenen Umschaltstab (161) aufweisen, wobei der Betriebsumschalthebel (151) einen Arm mit einem Ende (151b) aufweist, das durch einen Ansatz (166) des Umschaltstabs aufgrund einer Betätigung des handbetriebenen Umschaltstabs (161) bewegt werden kann, und der Betätigungshebel (156) einen darauf befindlichen Stift (158) aufweist, der in einen ausgesparten Bereich (154) des Betätigungshebels (156) eingreift, wodurch der Betätigungshebel (156) durch die Betätigung des Betriebsumschalthebels (151) so bewegt wird, daß die Betriebsart der Vorrichtung zu einem Wiederholbetrieb wechselt, wenn die Umschaltmittel (50) betätigt werden, während der Betriebsumschaltmechanismus (49) sich im Abschaltbetrieb befindet.

2. Bandaufzeichnungsvorrichtung mit automatischer Richtungsumkehr nach Anspruch 1, wobei der Umschaltmechanismus (45) einen Umschaltstab (80), der entweder in eine Normalposition oder eine Umkehrposition bewegbar ist, einen Nockenmechanismus (87, 89) zum Antreiben des Umschaltstabs (80) und ein Zahnrad, das durch Betätigung der Umschaltmittel angetrieben wird, aufweist.

3. Bandaufzeichnungsvorrichtung mit automatischer Richtungsumkehr nach Anspruch 2, wobei der Umschaltstab (80) Mittel (70, 71) aufweist, die wahlweise auf eine von entsprechenden Andruckrollen (11, 12) drücken, die gegenüberliegend von zwei Kapstanen (9, 10) gegenüber einem der Kapstane vorgesehen sind, und Mittel zum Bewegen eines Zwischenrads (34), um so wahlweise das Drehmoment eines Antriebsrads (24) auf eines von zwei Radunterteilen (7, 8) zu übertragen.

4. Bandaufzeichnungsvorrichtung mit automatischer Richtungsumkehr nach Anspruch 1, wobei der Umschaltmechanismus (45) einen Umschaltstab (80) aufweist, der zur Einnahme einer Lage in entweder einer Normalposition oder einer Umkehrposition gleiten kann, ein teilweise zahnloses Zahnrad (37), das drehbar ist und einen Nockenmechanismus (87, 89) aufweist, um den Umkehrstab (80) anzutreiben, und zahnlose Bereiche (120, 121) aufweist, die in dessen vorgegebenen peripheren Bereichen vorgesehen sind, ein Antriebszahnrad (38) zum kurzzeitigen Antreiben des teilweise zahnlosen Zahnrads (37), Verriegelungsmittel (122, 123, 127) zum Verriegeln des teilweise zahnlosen Zahnrads in einer Position, wo das Antriebszahnrad (38) und einer der zahnlosen Bereiche (120, 121) des teilweise zahnlosen Zahnrads gegenüberliegend zueinander sind, Mittel (47) zum Vorsehen eines Anfangsdrehmoments für das teilweise zahnlose Zahnrad, um das teilweise zahnlose Zahnrad (37) mit dem Antriebszahnrad (38) in Eingriff zu bringen, und Mittel zum Entriegeln des teilweise zahnlosen Zahnrads, wodurch das teilweise zahnlose Zahnrad durch Betätigung der Umschaltmittel (50) entriegelt wird und in das Antriebszahnrad eingreift, so daß eine Drehbewegung des teilweise zahnlosen Zahnrads, das durch das Antriebszahnrad angetrieben wird, über den Nockenmechanismus zum Umschaltstab (80) übertragen wird, um somit den Umschaltstab entweder in eine Normalposition oder eine Umkehrposition zu bewegen.

5. Bandaufzeichnungsvorrichtung mit automatischer Richtungsumkehr nach Anspruch 4, wobei die Verriegelungsmittel einen Auslösehebel (127) aufweisen, der in der Lage ist, in eine Verriegelungsklinke (122, 123) einzugreifen, die auf dem teilweise zahnlosen Zahnrad vorgesehen ist, und einen Elektromagneten (134, 138) zum Halten des Auslösehebels (127) in einer von zwei Positionen, der mit der Verriegelungsklinke (122, 123) in Eingriff steht oder von ihr gelöst ist, wodurch der Auslösehebel (127) in eine der beiden Positionen durch Steuern eines elektrischen Stroms, der zu einem Solenoid (138) des Elektromagneten geliefert wird, durch Betätigung der Umschaltmittel (50) bewegt wird.

6. Bandaufzeichnungsvorrichtung mit automatischer Richtungsumkehr nach Anspruch 5, wobei der elektrische Strom, der zum Solenoid geliefert wird, gesteuert wird, wenn das Bandende ermittelt wird, so daß der Auslösehebel (127) in die unverriegelte Position verschwenkt wird.

7. Bandaufzeichnungsvorrichtung mit automatischer Richtungsumkehr nach Anspruch 4, wobei die Anzahl der zahnlosen Bereiche (120, 121) bzw. der Verriegelungsklinken (122, 123) des teilweise zahnlosen Zahnrads gleich zwei ist, und die beiden zahnlosen Bereiche und die beiden Verriegelungsklinken jeweils symmetrisch in bezug auf den Mittelpunkt des teilweise zahnlosen Zahnrads angeordnet sind.

8. Bandaufzeichnungsvorrichtung mit automatischer Richtungsumkehr nach Anspruch 1, wobei der Abschaltmechanismus (175) einen Wiedergabebetriebsstab (53) aufweist, der von einem Stoppbetrieb in einer Rücklaufposition zu einem Wiedergabebetrieb in einer Vorlaufposition wechseln kann, Verriegelungsmittel (53a) zum Verriegeln des Wiedergabebetriebsstabs (53) in der Vorlaufposition, einen Abschalthebel (143) zum Antreiben der Verriegelungsmittel (53a) derart, um den Wiedergabebetriebsstab (53) zu entriegeln, und ein Zahnrad (38, 140), das eine Antriebsklinke (141) zum Antreiben des Abschalthebels (143) aufweist, um den Wiedergabebetriebsstab (53) zu entriegeln, und der angetrieben wird, wenn ein Bandende ermittelt wird.

9. Bandaufzeichnungsvorrichtung mit automatischer Richtungsumkehr nach Anspruch 8, wobei der Betriebsumschaltmechanismus (49) den Abschalthebel (143) aufweist, und den Betriebsumschalthebel (151), durch den der Abschalthebel (143) aus einer Abschaltbetriebsposition, wo die Antriebsklinke (141) eingreifen kann, in eine Wiedergabebetriebsposition verschwenkt wird, wo die Antriebsklinke (141) nicht eingreifen kann, so daß der Betriebsumschaltmechanismus (49) den Abschalthebel in die Abschaltbetriebsposition in Richtung auf die Wiedergabebetriebsposition durch Betätigung der Umschaltmittel verschwenkt.

10. Bandaufzeichnungsvorrichtung mit automatischer Richtungsumkehr nach Anspruch 9, wobei der Betriebsumschalthebel des Betriebsumschaltmechanismus (151) nicht in die Wiederholbetriebsposition sondern in die Abschaltbetriebsposition durch Betätigung der Abschaltmittel verschwenkt wird.

11. Bandaufzeichnungsvorrichtung mit automatischer Richtungsumkehr nach Anspruch 8, wobei beide Nockenmechanismen (87, 89) zum Antreiben des Umschaltstabs (80) und die Antriebsklinke (141) zum Antreiben des Abschalthebels (143) auf dem teilweise zahnlosen Zahnrad (37) vorgesehen sind, wobei das teilweise zahnlose Zahnrad entriegelt wird, wenn das Bandende ermittelt wird, und in das Antriebszahnrad (38) eingreift, so daß der Abschalthebel (143) durch die Antriebsklinke (141) aufgrund einer Drehung des teilweise zahnlosen Zahnrads angetrieben wird.

12. Bandaufzeichnungsvorrichtung mit automatischer Richtungsumkehr nach Anspruch 1, die einen Aufzeichnungseinleitungsstab (180) aufweist, der einen Beschränkungsbereich (236) aufweist, bei dem durch eine Bewegung aus einer Rücklaufposition zu einer Vorlaufposition entweder ein Stoppbetrieb oder ein Wiedergabebetrieb in einen Aufzeichnungsbetrieb umgeschaltet wird; und
einen Ansatz (237) auf dem handbetriebenen Umschaltstab (161), der in den Beschränkungsbereich (236) des Stabs (180) eingreifen kann, so daß beim Aufzeichnungsbetrieb der handbetriebene Umschaltstab (161) daran gehindert wird, sich zu bewegen, wodurch die Umschaltmittel (50) in einem Zeitpunkt des Aufzeichnungsbetriebs nach der Bewegung des Aufzeichnungseinleitungsstabs (180) in die Vorlaufposition nicht betätigbar sind.

13. Bandaufzeichnungsvorrichtung mit automatischer Richtungsumkehr nach Anspruch 12, wobei der Aufzeichnungseinleitungsstab (80) den Betrieb der Umschaltmittel (50) nur in ihrer Vorlaufposition verhindert, nicht aber in der Rücklaufposition.

14. Bandaufzeichnungsvorrichtung mit automatischer Richtungsumkehr nach Anspruch 12, wobei der Umschaltmechanismus einen Umschaltstab (80) aufweist, der bewegbar und in entweder einer Normalposition oder einer Umkehrposition angeordnet ist, und ein Zahnrad (37), das einen Nockenmechanismus (87, 89) zum Antreiben des Umschaltstabs (80) aufweist und das durch eine Betätigung der Umschaltmittel (50) verdrehbar ist.

15. Bandaufzeichnungsvorrichtung mit automatischer Richtungsumkehr nach Anspruch 12, wobei der Umschaltmechanismus einen Umschaltstab (80) aufweist, der gleiten kann und entweder in einer Normalposition oder einer Umkehrposition angeordnet ist, ein teilweise zahnloses Zahnrad (37), das drehbar ist und einen Nockenmechanismus (87, 89) zum Antreiben des Umschaltstabs aufweist und zahnlose Bereiche (120, 121) aufweist, die in dessen vorbestimmten Bereichen vorgesehen sind, Verriegelungsmittel (122, 123) zum Verriegeln des teilweise zahnlosen Zahnrads in einer Position, wo ein Antriebszahnrad (38) zum kurzzeitigen Antreiben des teilweise zahnlosen Zahnrads (37) und einer der zahnlosen Bereiche gegenüberliegend zueinander angeordnet sind, Mittel (127) zum Abgeben eines Anfangsdrehmoments an das teilweise zahnlose Zahnrad, damit das teilweise zahnlose Zahnrad in das Antriebszahnrad eingreift, und Mittel zum Entriegeln des teilweise zahnlosen Zahnrads, wobei das teilweise zahnlose Zahnrad durch Betätigungen der Umschaltmittel (50) entriegelt wird und in das Antriebszahnrad (38) eingreift, so daß eine Drehbewegung des teilweise zahnlosen Zahnrads, das durch das Antriebszahnrad angetrieben wird, zum Umschaltstab (80) über den Nockenmechanismus übertragen wird, um so den Umschaltstab (80) entweder zur Normalposition oder zur Umkehrposition zu bewegen.

16. Bandaufzeichnungsvorrichtung mit automatischer Richtungsumkehr nach Anspruch 15, wobei die Verriegelungsmittel einen Auslösehebel (127) zum Eingreifen in eine Verriegelungsklinke (122, 123) aufweisen, die auf dem teilweise zahnlosen Zahnrad (37) vorgesehen ist, und einen Elektromagneten (134, 138) zum Halten des Auslösehebels (127) in einer von zwei Positionen, die mit der Verriegelungsklinke (122, 123) in Eingriff stehen oder von ihr gelöst sind, wodurch der Auslösehebel (127) in eine der beiden Positionen durch Steuern eines elektrischen Stroms bewegt wird, der zu einem Solenoid (138) des Elektromagneten durch Betätigen der Umschaltmittel geliefert wird.

17. Bandaufzeichnungsvorrichtung mit automatischer Richtungsumkehr nach Anspruch 16, wobei die Anzahl der zahnlosen Bereiche (120, 121) bzw. der Verriegelungsklinken (122, 123) des teilweise zahnlosen Zahnrads gleich zwei ist, und die beiden zahnlosen Bereiche und die beiden Verriegelungsklinken jeweils symmetrisch in bezug auf den Mittelpunkt des teilweise zahnlosen Zahnrads angeordnet sind.

18. Bandaufzeichnungsvorrichtung mit automatischer Richtungsumkehr nach Anspruch 14, wobei der Umschaltstab (80) zumindest Mittel zum wahlweisen Drücken auf eine von zwei entsprechenden Andruckrollen (11, 12), die gegenüber von zwei Kapstanen (9, 10) vorgesehen sind, gegen einen der Kapstane aufweist, und Mittel zum Bewegen eines Zwischenrads (34), um so wahlweise das Drehmoment eines Antriebsrads (24) auf eines von zwei Radunterteilen (7, 8) zu übertragen.

19. Bandrecoder mit automatischer Richtungsumkehr mit einer Stoppbetriebsart, einer Wiedergabebetriebsart und einer Aufzeichnungsbetriebsart, die aufweist;
einen Bandendemechanismus zum Ermitteln eines Bandendes;
einen Abschaltmechanismus (48) zum Abschalten des Laufs eines Bandes (3) aufgrund einer Ermittlung eines Bandendes,
einen Betriebsumschaltmechanismus (49) zum Umschalten einer Betriebsart der Vorrichtung von einem Abschaltbetrieb in einen Wiederholbetrieb, bei dem ein Abschaltbetriebslauf des Bandes durch den Abschaltmechanismus (48) abgeschaltet wird, sobald das Bandende nach einem Normallauf oder nach einem Umkehrlauf ermittelt wird, wobei der Umkehrlauf einem Normallauf gefolgt sein kann, und wobei beim Wiederholbetrieb der Lauf des Bandes wiederholt von einem Normallauf zu einem Umkehrlauf durchgeführt wird; und
Schaltmittel zum Umschalten des Betriebsumschaltmechanismus (49) vom Wiederholbetrieb in den Abschaltbetrieb, so daß der Lauf des Bandes abgeschaltet wird, sobald das Bandende nach einem Normallauf oder einem Umkehrlauf ermittelt wird, wenn der Bandrecorder im Aufzeichnungsbetrieb sich befindet;
dadurch gekennzeichnet, daß
der Bandrecorder weiter einen Aufzeichnungseinleitungsstab (180) für eine Bewegung von einer Rücklaufposition zu einer Vorlaufposition aufweist, durch den entweder der Stoppbetrieb oder der Wiedergabebetrieb in den Aufzeichnungsbetrieb wechselt;
wobei die Schaltmittel einen Betätigungshebel (156) aufweisen, auf dem ein Stift angeordnet ist, der mit einem Druckbereich (232) zusammenwirkt, der als Ansatz auf dem Aufzeichnungseinleitungsstab gebildet ist, und einen Betriebsumschalthebel (151) mit einem ausgesparten Bereich (154) und einem Stift (158) auf dem Betätigungshebel (156), der in den ausgesparten Bereich (154) eingreift, um ein Umschalten der Betriebsumschaltmittel (49) vom Wiederholbetrieb zum Abschaltbetrieb zu bewirken, so daß der Lauf des Bandes abgeschaltet wird, sobald das Bandende nach einem Umkehrlauf ermittelt wird, der einem Normallauf folgt, wenn der Aufzeichnungseinleitungsstab (180) in die Vorlaufposition bewegt wird.

20. Bandrecorder nach Anspruch 19, wobei der Abschaltmechanismus (48) einen Betriebsstab (53) aufweist, der von einem Stoppbetrieb in einer Umkehrposition zu einem Wiedergabebetrieb oder einem Aufzeichnungsbetrieb in einer Vorlaufposition umschaltet, Verriegelungsmittel (53a) zum Verriegeln des Betriebsstabs (53) in der Vorlaufposition, einen Abschalthebel (143) zum Antreiben der Verriegelungsmittel derart, daß der Betriebsstab entriegelt wird, und ein Zahnrad (38, 140), das eine Antriebsklinke (141) zum Antrieb des Abschalthebels (143) aufweist, um so den Betriebsstab zu entriegeln, in welchem der Abschalthebel getrieben ist, wenn ein Bandende ermittelt wird.

21. Bandrecorder nach Anspruch 20, wobei der Betriebsumschaltmechanismus (49) den Abschalthebel (143) und einen Betriebsumschalthebel (151) aufweist, durch den der Abschalthebel (143) von einer Einweg-Betriebsposition oder einer Umlaufbetriebsposition, wo die Antriebsklinke (141) eingreifen kann, in eine Wiederholbetriebsposition verschwenkbar ist, wo die Antriebsklinke (141) nicht in Eingriff gelangen kann, oder das Gegenteil, so daß die Mittel zum Umschalten des Betriebsumschaltmechanismus eine solche Funktion haben, daß sie den Abschalthebel (143) zur Einweg-Betriebsposition oder zur Umlaufbetriebsposition durch Betätigung des Betriebsumschalthebels, der in der Wiederholbetriebsposition sich befindet, bewegen, wenn der Aufzeichnungseinleitungsstab (180) in Richtung auf die Vorlaufposition bewegt wird.

22. Bandrecorder nach Anspruch 19, wobei der Abschaltmechanismus (49) ein teilweise zahnloses Zahnrad (37) aufweist, das drehbar ist und das eine Antriebsklinke (141) zum Antreiben des Abschalthebels (143) aufweist, und zahnlose Bereiche (120, 121) aufweist, die in vorgegebenen Positionen von ihm vorgesehen sind, ein Antriebszahnrad (38) zum kurzzeitigen Antreiben des teilweise zahnlosen Zahnrads, Verriegelungsmittel (122, 123, 127) zum Verriegeln des teilweise zahnlosen Zahnrads (37) in einer Position, wo das Antriebszahnrad und der zahnlose Bereich des teilweise zahnlosen Zahnrads gegenüberliegend zueinander sind, Mittel (138) zum Abgeben eines Anfangsdrehmoments an das teilweise zahnlose Zahnrad, damit das teilweise zahnlose Zahnrad in das Antriebszahnrad (38) eingreift, und Mittel zum Entriegeln des teilweise zahnlosen Zahnrads, wodurch das teilweise zahnlose Zahnrad entriegelt wird, wenn das Bandende ermittelt wird, und in das Antriebszahnrad eingreifen, wobei der Abschalthebel (143) durch die Antriebsklinke aufgrund einer Drehbewegung des teilweise zahnlosen Zahnrads angetrieben wird.

23. Bandrecorder nach Anspruch 22, wobei die Verriegelungsmittel einen Auslösehebel (127) aufweisen, der in der Lage ist, in eine Verriegelungsklinke (122, 123) einzugreifen, die auf dem teilweise zahnlosen Zahnrad angeordnet ist, und einen Elektromagneten (134, 138) zum Halten des Auslösehebels (127) in einer von zwei Positionen, der mit der Verriegelungsklinke in Eingriff steht oder von ihr gelöst ist, wodurch der Auslösehebel in einer der beiden Positionen durch Steuern eines elektrischen Stroms, der zu einem Solenoid (138) des Elektromagneten aufgrund einer Ermittlung eines Bandendes geliefert wird, bewegt wird.

24. Bandrecorder nach Anspruch 23, wobei die Anzahl der zahnlosen Bereiche (120, 121) bzw. der Verriegelungsklinken (12, 123) des teilweise zahnlosen Zahnrads gleich zwei ist, und die beiden zahnlosen Bereiche und die beiden Verriegelungsklinken ebenso in bezug auf das Zentrum des teilweise zahnlosen Zahnrads (37) symmetrisch zueinander angeordnet sind.

## Revendications

1. Appareil d'enregistrement sur bande à fonctionnement automatique dans les deux sens, comprenant :
un mécanisme de commutation (45) destiné à changer sélectivement le déplacement d'une bande (3) d'un déplacement normal à un déplacement inverse par manoeuvre d'un dispositif de commutation (50),
un mécanisme de détection d'une fin de bande,
un mécanisme d'arrêt (48) destiné à interrompre le déplacement de la bande (3) à proximité de la fin de la bande, et
un mécanisme (49) de changement de mode destiné à commuter un mode de fonctionnement de l'appareil d'un mode d'arrêt à un mode de répétition, dans lequel le mode de répétition du déplacement de la bande est réalisé de manière répétée du déplacement normal au déplacement inverse et, pendant le mode d'arrêt, le déplacement de la bande est interrompu par le mécanisme d'arrêt (48) dès que la fin de bande est détectée,
caractérisé en ce que, en mode d'arrêt, le déplacement de la bande est terminé après un déplacement normal ou un déplacement inverse, le déplacement inverse pouvant avoir suivi un déplacement normal, et dans lequel l'appareil comporte en outre un dispositif interrupteur comprenant un levier de commande (156), un levier (151) de changement de mode et une tige manuelle (161) de commutation, dans lequel le levier (151) de commutation de mode possède un bras ayant une extrémité (151b) qui peut être déplacée par une saillie (166) de la tige de commutation après manoeuvre de la tige manuelle (161) de commutation, et le levier de commande (156) a un axe (158) qui coopère avec une partie à encoche (154) du levier de commande (156), si bien que le levier de commande (156) est déplacé par manoeuvre du levier (151) de commutation de mode afin que le mode de commande de l'appareil soit commuté à un mode de répétition lorsque le dispositif de commutation (50) est commandé alors que le mécanisme (49) de changement de mode est en mode d'arrêt.

2. Appareil d'enregistrement sur bande à fonctionnement automatique dans les deux sens selon la revendication 1, dans lequel le mécanisme de commutation (45) comporte une tige de commutation (80) qui est mobile vers une position normale ou une position inverse, un mécanisme à came (87, 89) destiné à entraîner la tige de commutation (80), et un pignon qui est entraîné par manoeuvre du dispositif de commutation.

3. Appareil d'enregistrement sur bande à fonctionnement automatique dans les deux sens selon la revendication 2, dans lequel la tige de commutation (80) comporte un dispositif (70, 71) destiné à appliquer sélectivement une pression à l'un des galets respectifs de pincement (11, 12) qui sont placés en face de deux cabestans (9, 10), contre l'un des cabestans, et un dispositif destiné à déplacer une roue intermédiaire (34) afin qu'elle transmette sélectivement le couple d'une roue menante (24) à l'une de deux bases (7, 8) de bobine.

4. Appareil d'enregistrement sur bande à fonctionnement automatique dans les deux sens selon la revendication 1, dans lequel le mécanisme de commutation (45) comporte une tige de commutation (80) qui peut coulisser afin qu'elle prenne une position normale ou une position inverse, un pignon (37) partiellement démuni de dents, qui peut tourner et qui possède un mécanisme à came (87, 89) destiné à entraîner la tige de commutation (80) et a des parties démunies de dents (120, 121) disposées dans des parties périphériques prédéterminées, un pignon menant (38) destiné à être en prise par intermittence avec le pignon (37) partiellement démuni de dents, un dispositif (122, 123, 127) de blocage du pignon partiellement démuni de dents dans une position dans laquelle le pignon menant (38) et l'une des parties démunies de dents (120, 121) du pignon partiellement démuni de dents sont en face mutuellement, un dispositif (47) destiné à appliquer un couple initial au pignon partiellement démuni de dents afin qu'il mette en prise le pignon (37) partiellement démuni de dents avec le pignon menant (38), et un dispositif destiné à débloquer le pignon partiellement démuni de dents, si bien que le pignon partiellement démuni de dents est débloqué par manoeuvre du dispositif de commutation (50) et est en prise avec le pignon menant, si bien que la rotation du pignon partiellement démuni de dents entraîné par le pignon menant est transmise à la tige de commutation (80) par l'intermédiaire du mécanisme à came et provoque le déplacement de la tige de commutation vers une position normale ou une position inverse.

5. Appareil d'enregistrement sur bande à fonctionnement automatique dans les deux sens selon la revendication 4, dans lequel le dispositif de blocage comprend un levier de déclenchement (127) qui peut coopérer avec un cliquet de blocage (122, 123) disposé sur le pignon partiellement démuni de dents, et un électro-aimant (134, 138) destiné à maintenir le levier de déclenchement (127) dans l'une de deux positions de coopération avec le cliquet de blocage (122, 123) ou de séparation de ce cliquet, si bien que le levier de déclenchement (127) est déplacé vers l'une des deux positions par commande d'un courant électrique transmis à une bobine (138) de l'électro-aimant par manoeuvre du dispositif de commutation (50).

6. Appareil d'enregistrement sur bande à fonctionnement automatique dans les deux sens selon la revendication 5, dans lequel le courant électrique transmis à la bobine est commandé lorsque la fin de bande est détectée, si bien que le levier de déclenchement (127) pivote vers la position débloquée.

7. Appareil d'enregistrement sur bande à fonctionnement automatique dans les deux sens selon la revendication 4, dans lequel le nombre de parties démunies de dents (120, 121) et de cliquets de blocage (122, 123) du pignon partiellement démuni de dents est égal à deux, et les deux parties démunies de dents et les deux cliquets de blocage sont disposés symétriquement par rapport au centre du pignon partiellement démuni de dents.

8. Appareil d'enregistrement sur bande à fonctionnement automatique dans les deux sens selon la revendication 1, dans lequel le mécanisme d'arrêt (175) comporte une tige (53) de commande de lecture qui peut passer d'un mode d'arrêt en position de retour à un mode de lecture en position avant, un dispositif (53a) de blocage de la tige de commande de lecture (53) en position avant, un levier d'arrêt (143) destiné à entraîner le dispositif de blocage (53a) afin qu'il débloque la tige de commande de lecture (53), et un pignon (38, 140) qui possède un cliquet (141) d'entraînement du levier d'arrêt (143) afin qu'il débloque la tige de commande de lecture (53) et qui est entraîné lorsqu'une fin de bande est détectée.

9. Appareil d'enregistrement sur bande à fonctionnement automatique dans les deux sens selon la revendication 8, dans lequel le mécanisme (49) de changement de mode comprend le levier d'arrêt (143), et le levier (151) de changement de mode grâce auquel le levier d'arrêt (143) pivote d'une position de mode d'arrêt dans laquelle le cliquet d'entraînement (141) peut être en prise à une position de mode de répétition dans laquelle le cliquet d'entraînement (141) ne peut pas être en prise, si bien que le mécanisme de changement de mode (49) fait pivoter le levier d'arrêt en position de mode d'arrêt vers la position de mode de répétition par manoeuvre du dispositif de commutation.

10. Appareil d'enregistrement sur bande à fonctionnement automatique dans les deux sens selon la revendication 9, dans lequel le levier de changement de mode du mécanisme (151) de changement de mode ne pivote pas dans la position de mode de répétition mais pivote dans la position de mode d'arrêt par manoeuvre du dispositif de commutation.

11. Appareil d'enregistrement sur bande à fonctionnement automatique dans les deux sens selon la revendication 8, dans lequel le mécanisme à came (87, 89) d'entraînement de la tige de commutation (80) et le cliquet (141) d'entraînement du levier d'arrêt (143) sont tous deux disposés sur le pignon partiellement démuni de dents (37), ce pignon étant débloqué lorsque la fin de bande est détectée et étant en prise avec le pignon menant (38), si bien que le levier d'arrêt (143) est entraîné par le cliquet d'entraînement (141) du fait de la rotation du pignon partiellement démuni de dents.

12. Appareil d'enregistrement sur bande à fonctionnement automatique dans les deux sens selon la revendication 1, comprenant une tige (180) de déclenchement d'enregistrement qui comporte une partie de retenue (236), et dans lequel, lors d'un mouvement d'une position de retour à une position avant, un mode d'arrêt ou un mode de lecture est commuté vers un mode d'enregistrement, et
une saillie (237) formée sur la tige manuelle de commutation (161) et qui peut coopérer avec la partie de retenue (236) de la tige (180), si bien que, en mode d'enregistrement, la tige manuelle de commutation (161) ne peut pas être déplacée et rend inopérant le dispositif de commutation (50) au moment d'un mode d'enregistrement après déplacement de la tige (180) de déclenchement d'enregistrement vers la position avant.

13. Appareil d'enregistrement sur bande à fonctionnement automatique dans les deux sens selon la revendication 12, dans lequel la tige (80) de déclenchement d'enregistrement empêche le fonctionnement du dispositif de commutation (50) uniquement dans la position avant mais non dans la position de retour.

14. Appareil d'enregistrement sur bande à fonctionnement automatique dans les deux sens selon la revendication 12, dans lequel le mécanisme de commutation comporte une tige de commutation (80) qui est mobile et qui est placée en position normale ou en position inverse, et un pignon (37) qui possède un mécanisme à came (87, 89) d'entraînement de la tige de commutation (80) et qui est entraîné en rotation par manoeuvre du dispositif de commutation (50).

15. Appareil d'enregistrement sur bande à fonctionnement automatique dans les deux sens selon la revendication 12, dans lequel le mécanisme de commutation comporte une tige (80) de commutation qui peut coulisser et qui est placée dans une position normale ou une position inverse, un pignon partiellement démuni de dents (37) qui peut tourner et qui possède un mécanisme à came (87, 89) destiné à entraîner la tige de commutation et qui a des parties démunies de dents (120, 121) disposées dans des parties prédéterminées, un dispositif (122, 123) de blocage du pignon partiellement démuni de dents en position dans laquelle un pignon menant (38) destiné à entraîner par intermittence le pignon partiellement démuni de dents (37) et l'une des parties démunie de dents sont en face l'un de l'autre, un dispositif (127) destiné à appliquer un couple initial au pignon partiellement démuni de dents afin qu'il mette en prise le pignon partiellement démuni de dents avec le pignon menant, et un dispositif de déblocage du pignon partiellement démuni de dents, et dans lequel le pignon partiellement démuni de dents est débloqué par manoeuvre du dispositif de commutation (50) et est en prise avec le pignon menant (38), si bien que la rotation du pignon partiellement démuni de dents entraîné par le pignon menant est transmise à la tige de commutation (80) par le mécanisme à came afin que la tige de commutation (80) soit déplacée vers la position normale ou la position inverse.

16. Appareil d'enregistrement sur bande à fonctionnement automatique dans les deux sens selon la revendication 15, dans lequel le dispositif de blocage comprend un levier de déclenchement (127) destiné à être au contact d'un cliquet de blocage (122, 123) disposé sur le pignon partiellement démuni de dents (37), et un électro-aimant (134, 138) destiné à maintenir le levier de déclenchement (127) dans l'une de deux positions, en prise avec le cliquet de blocage (122, 123) ou à distance de celui-ci, si bien que le levier de déclenchement (127) est déplacé vers l'une des deux positions par commande d'un courant électrique transmis à une bobine (138) de l'électro-aimant par manoeuvre du dispositif de commutation.

17. Appareil d'enregistrement sur bande à fonctionnement automatique dans les deux sens selon la revendication 16, dans lequel le nombre de parties démunies de dents (120, 121) et de cliquets de blocage (122, 123) du pignon partiellement démuni de dents est égal à deux, et les deux parties démunies de dents et les deux cliquets de blocage sont disposés symétriquement par rapport au centre du pignon partiellement démuni de dents.

18. Appareil d'enregistrement sur bande à fonctionnement automatique dans les deux sens selon la revendication 14, dans lequel la tige de commutation (80) au moins comporte un dispositif destiné à repousser sélectivement l'un de deux galets de pincement (11, 12) placés en face de deux cabestans (9, 10) contre l'un des cabestans, et un dispositif destiné à déplacer une roue intermédiaire (34) afin qu'elle transmette sélectivement le couple d'une roue motrice (24) à l'une de deux bases (7, 8) de bobine.

19. Magnétophone du type à fonctionnement automatique en sens inverse, ayant un mode d'arrêt, un mode de lecture et un mode d'enregistrement, comprenant :
un mécanisme de détection de fin de bande,
un mécanisme (48) d'arrêt du déplacement d'une bande (3) à la suite de la détection d'une fin de bande,
un mécanisme (49) de changement de mode destiné à commuter un mode de fonctionnement de l'appareil d'un mode d'arrêt à un mode de répétition, dans lequel le déplacement de la bande en mode d'arrêt est interrompu par le mécanisme d'arrêt (48) dès que la fin de bande est détectée après un déplacement normal ou après un déplacement inverse, le déplacement inverse pouvant avoir suivi un déplacement normal, et, en mode de répétition, le déplacement de la bande est exécuté de manière répétée d'un déplacement normal à un déplacement inverse, et
un dispositif de commutation du mécanisme (49) de changement de mode du mode de répétition au mode d'arrêt afin que le déplacement de la bande soit interrompu dès que la fin de la bande est détectée après un déplacement normal ou un déplacement inverse lorsque le magnétophone est en mode d'enregistrement,
caractérisé en ce que le magnétophone comporte en outre une tige (180) de déclenchement d'enregistrement destinée à se déplacer d'une position de retour à une position avant et grâce à laquelle le mode d'arrêt ou le mode de lecture est commuté au mode d'enregistrement, et
dans lequel le dispositif de commutation comprend un levier de commande (156) ayant un axe (233) coopérant avec une partie de pression (232) formée par une saillie de la tige de déclenchement d'enregistrement, et un levier de commutation de mode (151) ayant une partie à encoche (154) et un axe (158) du levier de commande (156) qui est au contact de la partie à encoche (154) pour assurer la commutation du dispositif de changement de mode (49) du mode de répétition au mode d'arrêt, si bien que le déplacement de la bande est interrompu dès que la fin de bande est détectée après un déplacement en sens inverse suivant un déplacement normal lorsque la tige de déclenchement d'enregistrement (180) est déplacée vers sa position avant.

20. Magnétophone selon la revendication 19, dans lequel le mécanisme d'arrêt (48) comporte une tige de commande (53) pour la commutation d'un mode d'arrêt, en position de retour, à un mode de lecture ou un mode d'enregistrement, en position avant, un dispositif (53a) de blocage de la tige de commande (53) dans la position avant, un levier d'arrêt (143) destiné à entraîner le dispositif de blocage afin qu'il débloque la tige de commande, et un pignon (38, 140) qui possède un cliquet (141) d'entraînement du levier d'arrêt (143) afin qu'il débloque la tige de commande, et dans lequel le levier d'arrêt est entraîné lorsqu'une fin de bande est détectée.

21. Magnétophone selon la revendication 20, dans lequel le mécanisme (49) de changement de mode comporte le levier (143) d'arrêt et un levier de changement de mode (151) grâce auquel le levier d'arrêt (143) pivote d'une position de mode unidirectionnel à une position de mode aller et retour dans laquelle le cliquet d'entraînement (141) peut coopérer, à une position de mode de répétition dans laquelle le cliquet d'entraînement (141) ne peut pas coopérer, ou inversement, de manière que le dispositif destiné à commuter le dispositif de changement de mode ait un fonctionnement tel qu'il déplace le levier d'arrêt (143) vers la position de mode unidirectionnel ou la position de mode aller et retour par manoeuvre du levier (151) de changement de mode placé en position de mode de répétition, lorsque la tige de déclenchement d'enregistrement (180) est déplacée vers la position avant.

22. Magnétophone selon la revendication 19, dans lequel le mécanisme d'arrêt (49) comporte un pignon partiellement démuni de dents (37) qui peut tourner et qui a un cliquet (141) d'entraînement du levier d'arrêt (143) et des parties démunies de dents (120, 121) occupant des positions prédéterminées du pignon, un pignon menant (38), destiné à entraîner par intermittence le pignon partiellement démuni de dents, un dispositif (122, 123, 127) de blocage du pignon partiellement démuni de dents (37) dans une position dans laquelle le pignon menant et la partie démunie de dents du pignon partiellement démuni de dents sont en face mutuellement, un dispositif (138) destiné à appliquer un couple initial au pignon partiellement démuni de dents afin qu'il mette en prise le pignon partiellement démuni de dents avec le pignon menant (38), et un dispositif de déblocage du pignon partiellement démuni de dents, si bien que le pignon partiellement démuni de dents est débloqué lorsque la fin de bande est détectée et est mis en prise avec le pignon menant, le levier d'arrêt (143) étant entraîné par le cliquet d'entraînement à la suite de la rotation du pignon partiellement démuni de dents.

23. Magnétophone selon la revendication 22, dans lequel le dispositif de blocage comprend un levier de déclenchement (127) qui peut coopérer avec un cliquet de blocage (122, 123) formé sur le pignon partiellement démuni de dents, et un électro-aimant (134, 138) destiné à maintenir le levier de déclenchement (127) dans l'une de deux positions en prise avec le cliquet de blocage ou séparée de ce cliquet, si bien que le levier de déclenchement est déplacé vers l'une des deux positions par commande d'un courant électrique transmis à une bobine (138) de l'électro-aimant à la suite de la détection de la fin de bande.

24. Magnétophone selon la revendication 23, dans lequel le nombre de parties démunies de dents (120, 121) et de cliquets de blocage (122, 123) du pignon partiellement démuni de dents est égal à deux, et les deux parties démunies de dents et les deux cliquets de blocage sont disposés symétriquement mutuellement et par rapport au centre du pignon démuni de dents (37).
